(19) **Europäisches Patentamt**
**European Patent Office**
**Office européen des brevets**

(11) **EP 2 055 020 B1**

(12) **EUROPEAN PATENT SPECIFICATION**

(45) Date of publication and mention
of the grant of the patent:
**12.04.2017 Bulletin 2017/15**

(51) Int Cl.:
**H04B 7/185** (2006.01)  **H04B 7/10** (2017.01)

(21) Application number: **07868334.9**

(86) International application number:
**PCT/US2007/076579**

(22) Date of filing: **22.08.2007**

(87) International publication number:
**WO 2008/054917 (08.05.2008 Gazette 2008/19)**

(54) **MULTI-SATELLITE COMMUNICATION SYSTEMS**

KOMMUNIKATIONSSYSTEM MIT MEHREREN SATELLITEN

SYSTÈMES DE COMMUNICATION À PLUSIEURS SATELLITES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **22.08.2006 US 823126 P
22.08.2006 US 823127 P
22.08.2006 US 823131 P
22.08.2006 US 823128 P**

(43) Date of publication of application:
**06.05.2009 Bulletin 2009/19**

(73) Proprietor: **ViaSat, Inc.
Carlsbad,
California 92009 (US)**

(72) Inventors:
• **DANKBERG, Mark, D.**
**Encinitas, California 92024 (US)**
• **MILLER, Mark J.**
**Encinitas, California 92024 (US)**
• **PATEROS, Charles, N.**
**Carlsbad, California 92008 (US)**

(74) Representative: **Smith, Jeremy Robert et al
Kilburn & Strode LLP
20 Red Lion Street
London WC1R 4PJ (GB)**

(56) References cited:
**EP-A1- 1 163 742      WO-A1-2005/091528
WO-A1-2005/093967    US-A1- 2003 050 008
US-A1- 2004 095 907**

**Description**

BACKGROUND OF THE INVENTION

This disclosure relates in general to multi-satellite communications and, but not by way of limitation, to multi-satellite power limited communications, multipath downstream satellite communication systems utilizing orthogonal frequency-division multiplexing.

Satellites are power limited. That is, satellites have a limited amount of power that must be used for communications, propulsion, processing, steering etc. Increasing the available power can be very expensive. Thus, satellite systems are often designed with tight power budgets. Providing increased power to a communication link can be very expensive. On the other hand, the quality of a communication link is proportional to the power of the communication link. Thus, a balance is often struck between quality and cost when considering power needs of a communication link.

Some satellites provide higher power forward service links and lower power return feeder links. For example, a satellite may provide 100 W forward service link and a 10 W return feeder link. Subscriber terminals are often small and have a broad beam and thus require higher power forward service link from the satellite. On the other hand, gateways often have large narrow beams that are pointed toward the satellite allowing for a lower power return feeder link.

Some satellites communicate with a gateway or subscriber terminals using right or left-hand polarized signals. Doing so allows a second satellite to operate within the same bandwidth and in the same geographic area using the opposite polarity without interfering with the first satellite and thus providing twice the bandwidth over a single satellite system. Other systems use other orthogonal signals other than right and left hand polarization.

Moreover, subscriber terminals can employ small aperture wide beam width antennas that can collect potentially interfering signals from satellites near the target satellite. For example, a mobile subscriber terminal may employ an antenna with a larger beam width in order to more easily point toward the target satellite as the subscriber terminal is in motion. These potentially interfering signals can impact the reception of the target signal from the target satellite. Often successive interference cancellation techniques may be employed to remove these interfering signals from the target signal with varying degrees of success.

On the other hand, gateway antennas are often larger than subscriber terminal antennas. Accordingly, the return link between the satellite and gateway can be lower powered than the link between the satellite and a subscriber terminal. Moreover, performance gains may be important between the gateway and the satellite because of these often lower powered signals.

There is a general need in the art to provide increases in the power of satellite communication links without greatly increasing the costs of the overall satellite system. There is also a need in the art to provide a satellite communication system that compensates for the effects of interference from nearby satellites. There is also a general need in the art to provide satellite communication links with increased signal strength without greatly increasing the costs of the overall satellite system.

WO 2005/093967 discloses a satellite radioterminal communications system which may include first and second space-based components and a return link diversity combiner. The first space-based component may be configured to communicate uni-directionally and/or bidirectionally with a first radioterminal over a first forward link using a first band of frequencies (F1) and/or over a first return link using a second band of frequencies (F2). The second space-based component may be configured to communicate uni-directionally and/or bidirectionally with a second radioterminal over a second forward link using a third band of frequencies (F3) and/or over a second return link using a fourth band of frequencies (F4). The second space-based component may also be configured to receive return link communications from the first radioterminal over the first return link using the second band of frequencies (F2), and the first and third bands of frequencies may be different bands of frequencies. The return link diversity combiner may be configured to combine return link communications received from the first radioterminal at the first and second space-based components.

WO 2005/091528 A1 discloses communication diversity using a plurality of satellites. The satellites can support multiple regions corresponding to multiple satellite beams.

WO 00/59136 A1 (also published as EP 1163742 A0) discloses an apparatus and method for paging a user terminal using a satellite communications system having a gateway and one or more satellites, wherein each satellite produces a plurality of beams and each beam includes a plurality of channels.

BRIEF SUMMARY OF THE INVENTION

A satellite communication system as defined by the independent claim 1.

The first and second satellites may orbit within the same orbital slot or different orbital slots. The gateway may include two antennas. The first antenna is configured to receive the polarized signals from the first and second satellites, and a second antenna is configured to receive the orthogonally polarized signals from the first and second satellites. The polarized signals may be left-hand polarized and the orthogonally polarized signals may be right-hand polarized. Alternatively, the polarized signals may be right-hand polarized and the orthogonally polarized signals may be left-hand polarized.

In another embodiment of the invention, the gateway includes a first antenna configured to receive the polarized signals from the first satellite, a second antenna configured to receive the orthogonally polarized signals from the first satellite, a third antenna configured to receive the polarized signals from the second satellite, and a fourth antenna configured to receive the orthogonally polarized signals from the second satellite.

The polarized signals and the orthogonally polarized signals of embodiments of the invention may comprise spread spectrum signals. The signals may employ TDM, TDMA, CDMA, SCDMA, FDM, OFDM, WDM, FHSS, DSSS, or the like coding and/or access schemes.

A satellite communication method as defined by independent claim 10.

A gateway comprising two antennas is also provided according to a further aspect. The gateway includes a first antenna configured to receive polarized signals from both a first satellite and a second satellite and configured to transmit signals to the first satellite. The gateway also includes a second antenna configured to receive orthogonally polarized signals from both the first satellite and the second satellite and configured to transmit signals to the second satellite. The first antenna may be configured to transmit signals to a first plurality of users through the first satellite. The second antenna may be configured to transmit signals to a second plurality of users through the second satellite. The first and second satellites may be in the same orbital slot.

A gateway comprising four antennas is also provided according to according to a further aspect. The gateway includes a first antenna configured to receive polarized signals from a first satellite and a second antenna configured to receive orthogonally polarized signals from the first satellite. The gateway also includes a third antenna configured to receive polarized signals from the first satellite and a fourth antenna configured to receive orthogonally polarized signals from the second satellite. The first antenna and/or third antenna transmit feeder signals to the first satellite and the second antenna and/or fourth antenna transmit feeder signals to the second satellite. The first and second satellites may be in different orbital slots.

In yet another aspect the present disclosure provides for a satellite communication system that includes a plurality of satellites, a gateway and a plurality of subscriber terminals in communication with the gateway through the satellites. The gateway includes a plurality of antennas each pointed toward a specific satellite. Each antenna may transmit the same signal to the satellites. The signal may be an OFDM signal. The subscriber terminals may include an antenna pointed toward at least one of the satellites and configured to receive OFDM signals. The OFDM signal time is proportional to the longest transmission time difference of all subscriber terminals within the geographic area serviced by the satellites. The transmission time difference is a measure of the difference between the transmission time of a signal over the longest transmission path and the transmission time of a signal over the shortest transmission path to a subscriber terminal.

The number of orthogonal sub-carriers within the OFDM signal may be proportional to the OFDM symbol time. The gateway modulates the signals using quadrature amplitude modulation, phase-shift keying or other digital keying and/or modulating schemes. The system may include three satellites and three antennas at the gateway. The satellites may be within neighboring, adjacent, and/or the same orbital slots. The subscriber terminals may be in a fixed position, mobile, seaborne, spaceborne, airborne, etc. The antenna at the subscriber terminals may be a broad beam antenna with a large aperture.

A method for communicating with a plurality of subscriber terminals through a plurality of satellites using orthogonal frequency-division multiplexing (OFDM) is also provided according to another embodiment of the invention. The plurality of subscriber terminals may be located within a geographic area. The method may convert a data stream into an OFDM signal. The OFDM symbol time may be proportional to the largest transmission time difference at a subscriber terminal within a geographic area serviced by the satellites. This transmission time difference may be calculated as the difference between the transmission time of a signal over the longest transmission path and the transmission time of a signal over the shortest transmission path to a subscriber terminal. The transmission time difference may be calculated for each subscriber terminal within the geographic area serviced by the satellites. The largest difference may be used to set the OFDM symbol time. Once the OFDM signal is prepared the signal is transmitted through a plurality of antennas.

Another satellite communication system is also provided. The satellite communication system includes a plurality of satellites, a gateway with a plurality of antennas, and a fixed reference terminal. The system may also include a plurality of mobile and/or fixed subscriber terminals. The plurality of antennas at the gateway are each pointed toward one of the satellites. The fixed reference terminal may include one or more antennas pointed toward the plurality of satellites and configured to receive signals from the gateway through the plurality of satellites. The gateway may be configured to precorrect the signals transmitted from the gateway to the plurality of mobile subscriber terminals. The timing precorrection may be based on the time delay between signals received at the reference terminal. Timing delay information may be recorded at the reference terminal and transmitted to the gateway through the satellites or via an alternate technique such as over the Internet, etc.

A subscriber terminal for communicating with a gateway through more than one satellite relay is also provided according to a further aspect. The subscriber terminal includes an antenna, an isolator module and an adder module. The antenna is configured to receive a composite signal. This composite signal may include a first signal that is transmitted from a first user through a first satellite, a second signal that is transmitted from the first user through a second satellite, and a third signal that is transmitted from a second user through the second satellite. The first signal and the second signal may be transmitted to the first and second satellites as the same signal from the transmitter, gateway or subscriber terminal. The isolator module may be configured to isolate the third signal from the composite signal, which is then subtracted from the third signal. The composite signal then includes the first and second signals which are the same signal transmitted from the same transmitter. The isolator may include a RAKE receiver or an iterative combiner. The antenna may be a wide beam antenna.

A satellite communication system is provided according to another aspect. The satellite communication system includes a gateway with one or more antennas, a plurality of satellites that include at least a first and a second satellite; and a plurality of subscriber terminals in communication with the gateway through the plurality of satellites. The subscriber terminals include an antenna, an isolator module and an adder module. The subscriber terminal may be configured as described above. The plurality of satellites and/or the first and second satellites may be in the same, different, adjacent and/or neighboring orbital slots. The gateway may include 1, 2, 3, 4, 5, 6, 7, 8, 9, 10 or more antennas.

The satellite communication system may also include at least a third satellite. The composite signal received at the subscriber terminal may further include a fourth signal that is transmitted from the gateway through the third satellite and a fifth signal that is transmitted from a second user through the third satellite. The first signal and the fourth signal may be the same signal when transmitted from the gateway. The isolator module may be configured to isolate the fifth signal from the composite signal. The adder module may be configured to subtract the fifth signal from the composite signal.

Another satellite communication method is disclosed according to another aspect. The satellite communication method may include receiving a composite signal at a subscriber terminal from at least two satellites. The composite signal may comprise a first primary signal that is transmitted from a first user through a first satellite, a first secondary signal that is transmitted from a second user through the first satellite, a second primary signal that is transmitted from a third user through a second satellite, and a second secondary signal that is transmitted from the second user through the second satellite. The first secondary signal and the second secondary signal may be transmitted to the first and second satellites as the same signal. The method further includes isolating the first and second secondary signals from the composite signals and then subtracting the first secondary and the first and secondary signals may then be subtracted from the composite signal.

Another satellite communication gateway is provided according to a further aspect. The gateway may include a first and second antenna. The first antenna may be configured to receive a signal from a first satellite that includes at least a first signal from a first user. The second antenna may be configured to receive a second signal from a second satellite that includes at least a second primary signal from a second user and a second secondary signal. The second secondary signal may include a version of the first signal from the first user. The gateway may also include a demodulator-remodulator configured to isolate the second primary signal from the second signal and an adder configured to subtract the second primary signal from the second signal leaving the second secondary signal. The gateway may also include a combiner configured to combine the first signal received at the first antenna and the second secondary signal received at the second antenna. According to one embodiment of the invention, the first user and/or the gateway does not lease access to the second satellite.

The satellite communication gateway may also include a third antenna configured to receive a signal from a third satellite. This third signal include at least a third primary signal from a third user and a third secondary signal. The third secondary signal may include a version of the first signal from the first user. The gateway may also include a demodulator-remodulator configured to isolate the third primary signal from the third signal and an adder configured to subtract the third primary signal from the third signal leaving the third secondary signal. The gateway may also include a combiner configured to combine the first signal received at the first antenna and the third secondary signal received at the third antenna. According to one aspect, the first user and/or the gateway does not lease access to the third satellite.

In one aspect, the gateway may include one or more combiners and/or remodulators/demodulators. In another aspect the combiner may be a maximal ratio combiner.

A satellite communication method is also provided according a further aspect. The method includes receiving a first signal from a first satellite The signal from the first satellite may include at least a first signal from a first user. The method also includes receiving a second signal from a second satellite. The signal from the second satellite may include at least a second primary signal from a second user and a second secondary signal. The second secondary signal may include a version of the first signal. The second primary signal may be canceled from the second signal. The resulting second signal may then be combined with the first signal. The method may also include delaying either the first or the second signal prior to the combining. The combining may include maximal ratio combining. The canceling may include demodulating the second signal using noise canceling techniques and/or forward error correction (FEC) decoding and/or encoding. The first user may leases access to the first satellite but does not lease access to the second satellite.

The satellite communication method may also include receiving a third signal from a third satellite. The third signal from the third satellite includes at least a third primary signal from a third user and a third secondary signal. The third secondary signal may include a version of the first signal. The third primary signal may be canceled from the third signal using interference canceling techniques. The resulting third signal may then be combined with the first signal. The first user may not lease access to the third satellite.

Another satellite communication method is provided according to another aspect. The method includes receiving a first and third signal from first and third satellites. The first signal includes at least a first primary signal from a first user and a second signal from a second user. The third signal includes at least a third primary signal from a third user and the second signal. These signals may be received at a gateway. The method also includes isolating the second signal from a version of the first signal and isolating the second signal from the third signal. The second signal isolated from the first signal and the second signal isolated from the third signal may then be combined. According to another aspect the second user and/or the gateway does not lease access to the first or third satellites.

Further areas of applicability of the present disclosure will become apparent from the detailed description provided hereinafter. It should be understood that the detailed description and specific examples, while indicating various embodiments, are intended for purposes of illustration only.

The scope is defined by appended claims.

BRIEF DESCRIPTION OF THE DRAWINGS

FIG. 1A shows the forward links of a satellite communication system according to one embodiment of the invention.

FIG. 1B shows the return links of a satellite communication system according to on embodiment of the invention.

FIG. 2 shows a block diagram of the return links of the satellite communication system shown in FIG. 1B according to one embodiment of the invention.

FIG. 3 shows a satellite communication system with four antennas at the gateway according to one embodiment of the invention.

FIG. 4 shows a block diagram of the return links of the satellite communication system shown in FIG. 3.

FIG. 5 shows the forward or downstream channel from a gateway to subscriber terminals according to another embodiment of the invention.

FIG. 6 shows a variable length superframe structure that may be used to send data on the downstream link according to another embodiment of the invention.

FIG. 7 is a block diagram depicting a method for combining composite signals received from an antennas at the gateway according to one embodiment of the invention.

FIG. 8 shows a block diagram of a method for iteratively combining composite signals received from an antenna at the gateway according to another embodiment of the invention.

FIG. 9 shows a method for combining signals received from two separate antennas according to another embodiment of the invention.

FIG. 10 shows a satellite communication system including a gateway with three antennas, three satellites and a mobile subscriber terminal according to one embodiment of the invention.

FIG. 11 shows the paths of two signals received at two different subscriber terminals 120 within a geographic area according to one embodiment of the invention.

FIGs. 12A and 12B each show three signals received at a subscriber terminal from three satellites with different path delays according to one embodiment of the invention.

FIG. 12C shows three signals received at a subscriber terminal from three satellites with different path delays and a symbol time that is shorter than the path delay of two of the signals according to one embodiment of the invention.

FIGs. 13A-C show a block diagram of an OFDM transmitter according to one embodiment of the invention.

FIGs. 14A-C show a block diagram of an OFDM receiver according to one embodiment of the invention.

FIG. 15 is a flowchart depicting converting a data stream to an OFDM signal according to one embodiment of the invention.

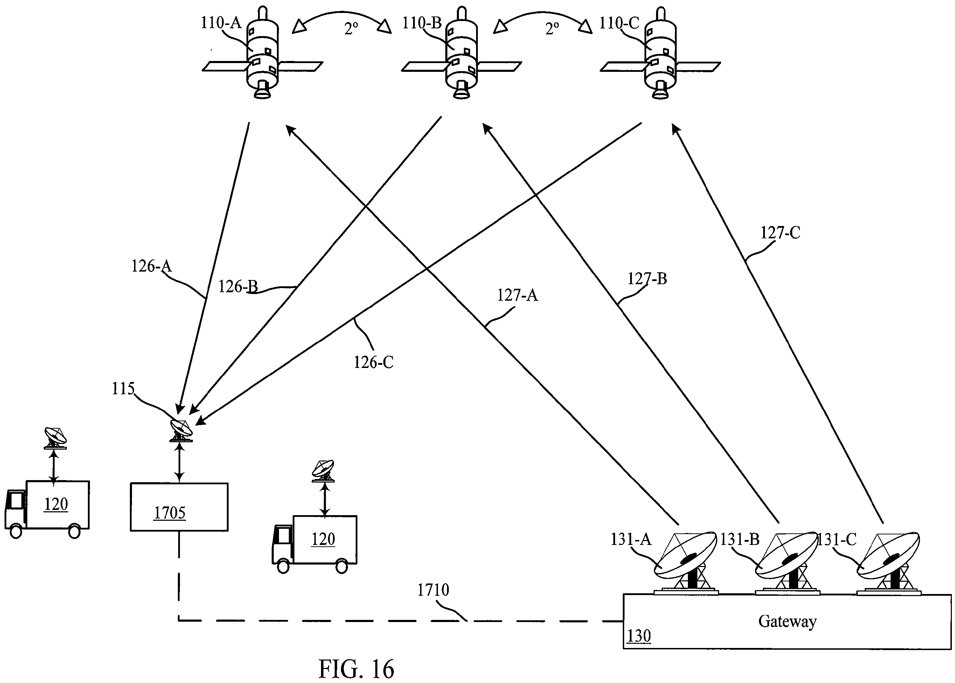

FIG. 16 shows a satellite communication system with a broad-beam reference terminal according to one embodiment of the invention.

FIG. 17 shows a satellite communication system with a narrow-beam reference terminal with three antennas according to one embodiment of the invention.

FIG. 18 depicts a common satellite communication system showing multiple subscriber terminals, each of which are in communication with a gateway through an independent satellite.

FIG. 19A shows a satellite communication system according to one embodiment of the invention.

FIG. 19B shows another satellite communication system according to another embodiment of the invention.

FIG. 20 shows a flowchart of a method for combining three signals (A, B, and C) that are received as a composite signal at a subscriber terminal through multiple satellites according to one embodiment of the invention.

FIG. 21 shows another satellite communication system according to another embodiment of the invention.

FIG. 22 shows a flow chart for isolating and adding signals received from secondary satellites according to another embodiment of the invention.

FIG. 23 shows a satellite communication system according to one embodiment of the invention.

FIG. 24 shows a flowchart showing a method for combining signals received from the subscriber terminal according to one embodiment of the invention.

FIG. 25 shows a satellite communication system according to another embodiment of the invention.

FIG. 26 shows yet another satellite communication system according to another embodiment of the invention.

FIG. 27 shows a flow chart for isolating and adding the signals received from secondary satellites according to another embodiment of the invention

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

DETAILED DESCRIPTION OF THE INVENTION

The ensuing description provides preferred exemplary embodiment(s) only, and is not intended to limit the scope, applicability or configuration of the disclosure. Rather, the ensuing description of the preferred exemplary embodiment(s) will provide those skilled in the art with an enabling description for implementing a preferred exemplary embodiment. It being understood that various changes may be made in the function and arrangement of elements without departing from the scope as set forth in the appended claims.

In one embodiment, the present disclosure provides for satellite communication system comprising a gateway, a first satellite, and second satellite. The first and second satellite may be located in orbits that are close enough together that they can both receive signals transmitted by a first and second groups of subscriber terminals. The first group of subscriber terminals may receive and transmit signals in a first polarization and the second set of subscriber terminals may transmit and receive orthogonally polarized signals. The first satellite receives first signals through a first forward feeder link from the gateway and retransmits the first signals to the first group of subscriber terminals. The second satellite likewise receives second signals through a second forward feeder link from the gateway and retransmits the second signal to the second group of subscriber terminals. The first signals may be orthogonally polarized from the second signals.

The first subscriber terminals may transmit polarized return signals to both the first and second satellites. Likewise, the second subscriber terminals may transmit orthogonally polarized return signals to both the first and second satellites. Thus, both satellites may be equipped with antennas and/or antenna elements and receivers that receive polarized and orthogonally polarized signals from the first and second groups of subscriber terminals. For example, the polarized signals may be right-hand polarized and the orthogonally polarized signals may be left-hand polarized. The satellite antennas may also have a broad enough beam size in order to communicate with all or most of the subscribers within the first and second groups of subscriber terminals. The first and second satellites may retransmit the polarized signals and the orthogonally polarized signals to the gateway. Thus, two polarized links and two orthogonally polarized links are established with the gateway from the two satellites.

At the gateway, the composite polarized signals are received at a first antenna and the composite orthogonally polarized signals are received at a second antenna. The gateway may include a receiver at both antennas. These receivers may include circuitry that combines the composite signals into a single signal. Because of path differences, the signal received from the first satellite and the signal received from the second satellite may not be aligned in time. An iterative combiner or RAKE receiver (for example, with low auto-correlation direct sequence spread spectrum signaling) may be employed to properly combine the composite signals.

If each of the two satellites were only equipped to provide a single polarization return link, the return feeder link, for example, may provide only 10 W of power and the forward service links may provide 90 W of power. Using this embodiment of the invention the return feeder link is doubled by providing two satellites each with two 10 W feeder links. Thus, with a small increase in the overall communication power budget, the return feeder link power may be doubled. With this example, the increase in power is only about 10%. but the increase in gain is double. Other examples may increase the power only 5%, for example if the forward link provides 95 W and the return link provides 5 W. Of course, the above mentioned power numbers are completely exemplary only. Various other power budgets may be used depending on the power usage of the return and feeder links. These numbers are used solely to show how a large increase in the return feeder link power may be provided with a small increase in satellite power use.

Another embodiment of the invention provides for a gateway with four antennas in communication with at least two satellites. Each of the two satellites provide polarized and orthogonally polarized return feeder link signals in communication with two of the four gateway antennas. These satellites may be within the same or different orbital slots, but far enough apart in order for individual antennas at the gateway to communicate with a single satellite. Accordingly, the first satellite provides a polarized feeder link with a first gateway antenna and an orthogonally polarized feeder link with a second gateway antenna. The second satellite provides a polarized feeder link with a third gateway antenna and an orthogonally polarized feeder link with a fourth gateway antenna. The like polarized signals may be combined at the gateway. In this embodiment, the separated signals can be iteratively combined using previously disclosed techniques, taking into account that the path delays will generally be many symbols long.

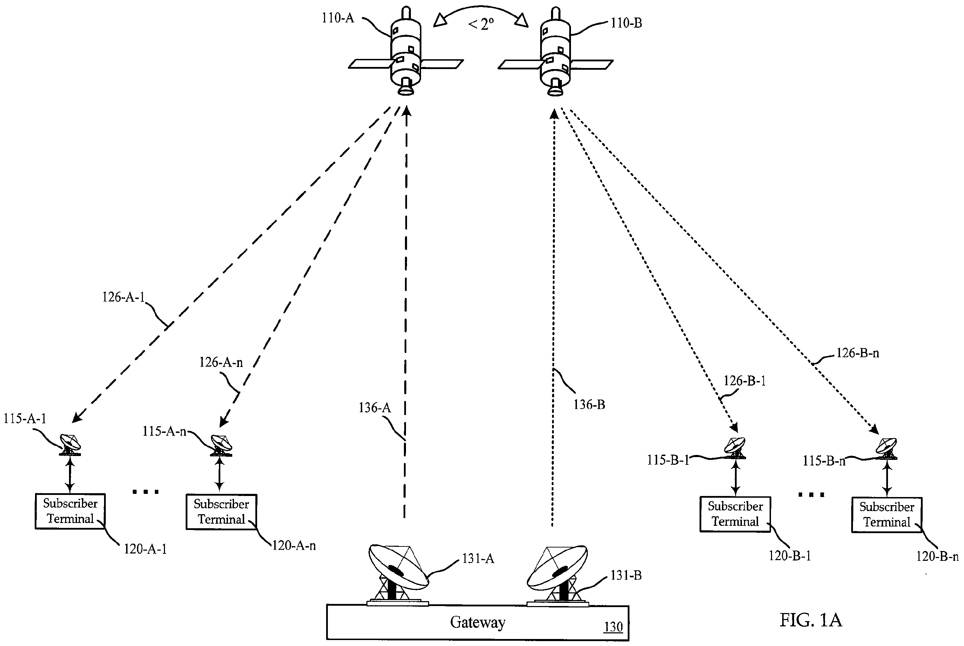

FIG. 1A shows the forward links of a satellite communication system according to one embodiment of the invention. A gateway 130 with two antenna 131-A, 131-B may be coupled with a network (not shown), for example, the Internet. The gateway 130 uses two satellite antennas 131-A, 131-B to bi-directionally communicate with satellites 110-A, 110-B on a feeder link. The forward feeder links 136 communicate information from the gateway 130 to the satellites 110. The first feeder link 136-A, in this embodiment, is right-hand polarized and the second feeder link 136-B is left-hand polarized. While right and left-hand polarization is used to describe this embodiment of the invention, other orthogonality schemes may be employed. Although not shown, there may be a number of gateways 130 in the system.

The satellites 110 may perform switching of signals from the gateway or be a bent-pipe that forwards signals from the gateway to the subscriber terminals 120 and vice versa. Information may bi-directionally pass through each satellite 110. The satellites 110 could use one or more antennas or a phased array when communicating with either the gateway or user terminals. The satellites 110, in this embodiment, are within less than 2° of each other. That is, the satellites may be within the same orbit slot. As shown, the first satellite 110-A communicates with the gateway through first antenna 131-A and the second satellite 110-B communicates with the gateway through the second antenna 131-B. The two satellites communicate over independent service links with a first and second group of subscriber terminals. Because the two satellites 110 are within the same orbital slot, the two satellites 110 may be seen by both antennas 131 at the gateway 130. The first gateway antenna 131-A communicates with the first satellite 110-A using a first signal 136-A that is polarized in one sense, for example right-handed, and the second gateway antenna 131-B communicates with the second satellite 110-B using a second link 136-B that is polarized in the opposite sense, for example left-hand polarized.

As shown in the figure, the first satellite 110-A communicates with a first group of user terminals 120-A using a first downlink signal 126-A and the second satellite 110-B communicates with a second group of user terminals 120-B using a second downlink signal 126-B. Each user terminal 120 may include an antenna 115 or various antenna elements. The first downlink signal 126-A may be right-hand polarized and the second downlink signal 126-B may be left hand polarized or vice versa. The antennas 115-A, according to this embodiment of the invention, at the first group of subscriber terminals may be right-hand polarized and the antennas 115-B at the second group of subscriber terminals may be left-hand polarized.

Communication data to and from the satellites may be focused into narrow beams that are focused on a localized geographic areas; for example, a large metropolitan area. Similarly, the communication data may be focused into broad beams that cover large geographic areas, for example, the continental US (CONUS). The data may also be communicated using both narrow beams and broad beams.

The downlink signals 126 from the satellites 110 may be comprised of a broadcast component that is sent to all subscriber terminals within a broad beam and a plurality of regional or narrow beam data that are transmitted only to subscriber terminals 120 within a specific narrow beam. Narrow beams may be directed toward a specific geographic locality. For example, the first satellite 110-A may communicate with subscriber terminals 120-A within one geographical location and the second satellite 110-B may communicate with subscriber terminals 120-B within a second geographic area. In another embodiment, the geography of the first group of subscriber terminals 115-A and the second group of subscriber terminals 115-B may overlap or cover the same geographic area. Data within the broad and narrow beams may be sent using a modulation scheme such as, for example, TDM, FDM, OFDM, CDMA, a combination of the two, a spread spectrum scheme or a similar multiplexing scheme. The data within the broad and narrow beams may use the same carrier frequency and/or frequency band.

The subscriber terminals 120 in this embodiment may be bi-directionally coupled to the satellites 110 to provide connectivity with the gateway 130. Each subscriber terminal 120 can receive information through the downlink signal 126 from the satellites 110. The subscriber terminals include antennas that may be

Subscriber terminals 120 may have multiple antennas coupled with a single receiver. The subscriber terminal 120 can be in a fixed or nomadic location, or can be mobile. In this embodiment, the subscriber terminal 120 interacts with a single transceiver in one or both of the satellites 110. Other embodiments could allow the subscriber terminal 120 to interact with multiple transceivers that may communicate with orbital or non- orbital assets (e.g., air, ground or sea based). Some embodiments of the subscriber terminal 120 allow switching between these modes.

A network (not shown) may be connected with the gateway 130 and may be any type of network and can include, for example, the Internet, an IP network, an intranet, a wide-area network ("WAN"), a local-area network ("LAN"), a virtual private network, the Public Switched Telephone Network ("PSTN"), a cluster of computers, and/or any other type of network supporting data communication between devices described herein, in different embodiments. A network 120 may include both wired and wireless connections, including optical links. Many other examples are possible and apparent to those skilled in the art in light of this disclosure. As illustrated in a number of embodiments, the network may connect the gateway 130 with other gateways (not pictured), which are also in communication with satellites 110.

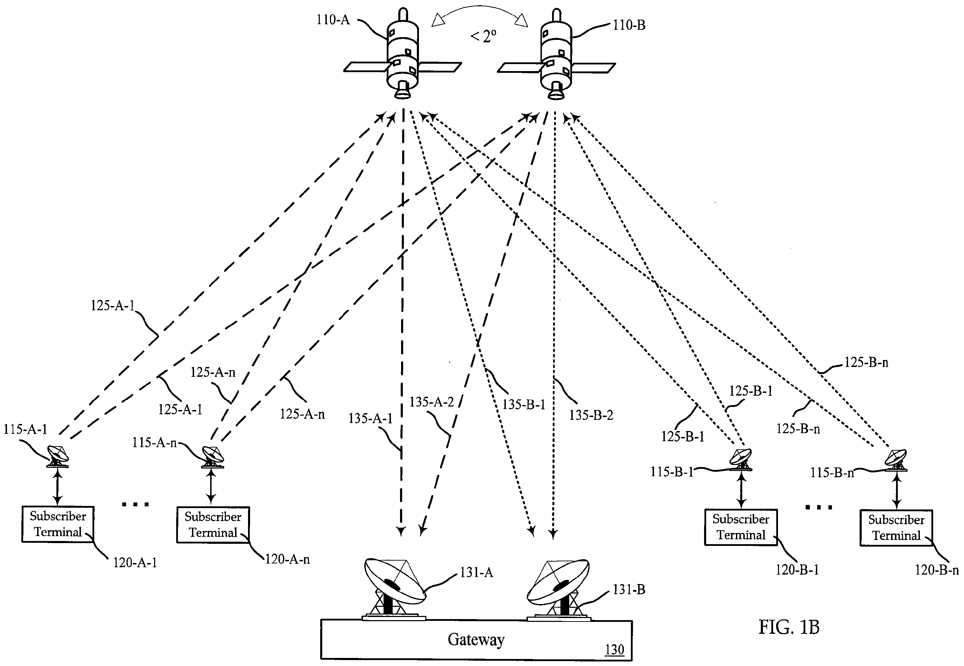

FIG. 1B shows the return links of a satellite communication system according to one embodiment of the invention. Both the first group of subscriber terminals 120-A and the second group of subscriber terminals 120-B send data to both the first and second satellites 110 using return service links 125. According to this embodiment of the invention, the signals from the first group of subscriber terminals 120-A may be right hand polarized and the signals from the second group of subscriber terminals 120-B may be left hand polarized. Both satellites 110 are equipped with antennas that may receive both the right-hand polarized signals and the left-hand polarized signals.

Each satellites 110 may then transmit the both the right and left-hand polarized signals to the gateway 130 using return feeder links 135. The two antennas 131 at the gateway may be pointed and/or have a broad enough beam to receive signals from both satellites. At the gateway, the right-hand polarized signals may be received by a first antenna 131-A and the left-hand polarized signals may be received by a second antenna 131-B. Thus, the gateway receives data from the first group of subscriber terminals 115-A from both satellites 110-A, 110-B and data from the second group of subscriber terminals 115-B may also be received from both satellites 110-A, 110-B. Thus, the signals received at the gateway from both satellites may have increased gain over signals received from a single satellite. In some cases this increased gain may be double.

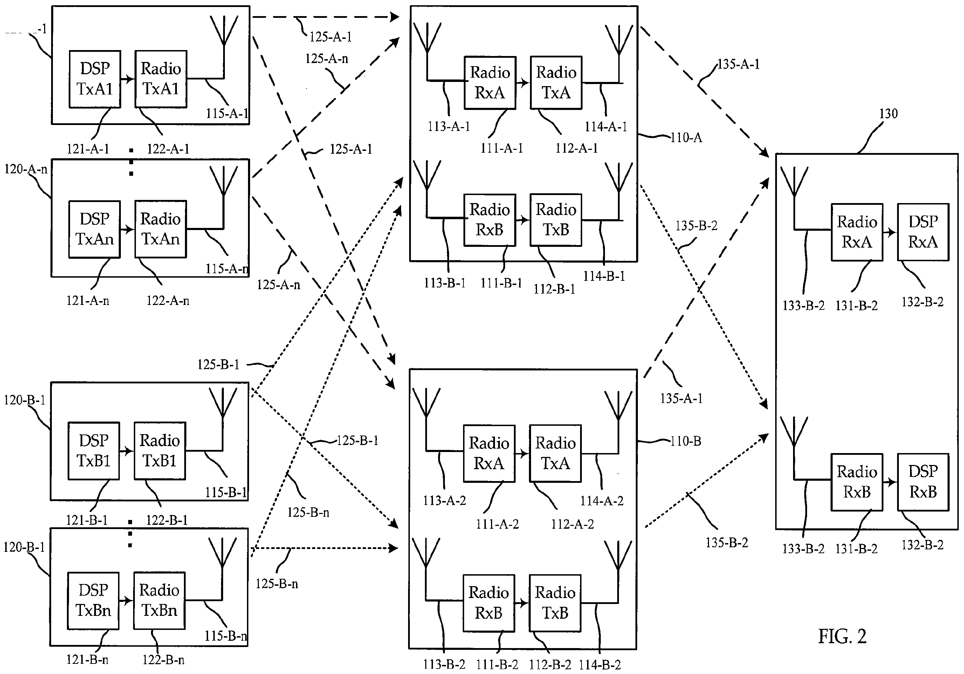

FIG. 2 shows a block diagram of the return path portion of a satellite communication system shown in FIG. 1B according to one embodiment of the invention. The block diagram shows a digital signal processor 121 coupled with a radio 122 and antenna 115 as part of each subscriber terminal 120. The satellites 110 are also shown as bent pipe systems. In other embodiments, the satellites may provide switching and/or other signal processing. Signals are received from the subscriber terminals 120 at a receiver radio 111 coupled with an antenna 113 and retransmitted via a radio 112 and antenna 114. As shown, each satellite 110 includes two receiver-transmitter pairs, one for the right hand polarization and one for the left hand polarization. In other embodiments, the satellite may also include processing and/or switching between the receiving radio and the transmitting radio. The gateway is also shown with two antennas 133 each coupled with a radio 131 and signal processor 132.

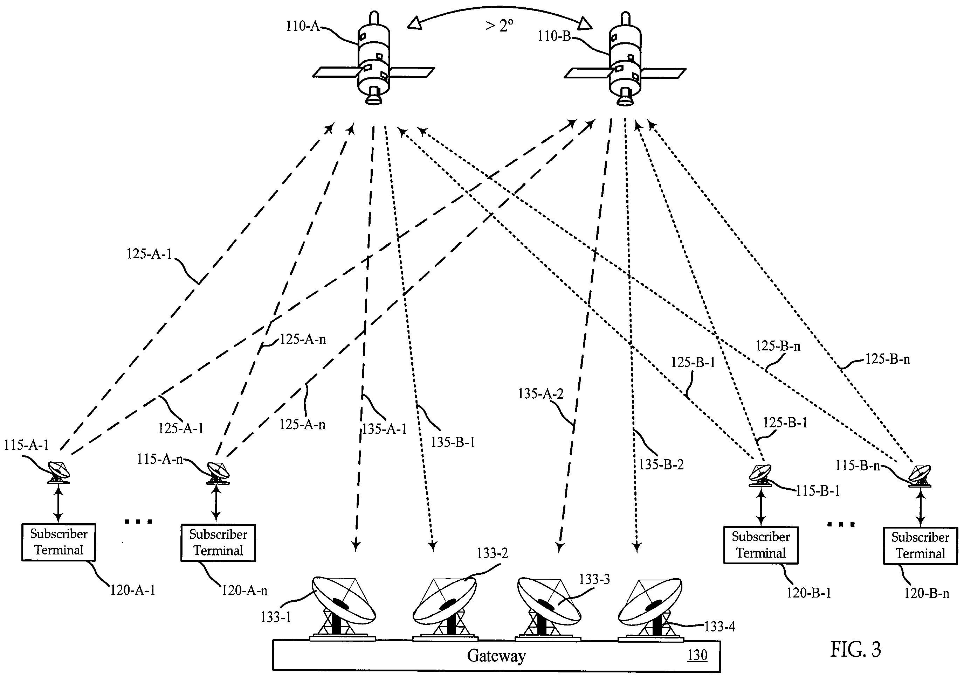

FIG. 3 shows the return path portion of a satellite communication system with four antennas at the gateway according to one embodiment of the invention. According to this embodiment of the invention, the satellites 110 are far enough apart that the antennas 133 at the gateway cannot see both satellites simultaneously. For example, the satellites may be in different orbital slots. The first antenna 133-1 receives right hand polarized signals 135-A-1 from the first satellite 110-A. The second antenna 133-2 receives left-hand polarized signals 135-B-1 from the first satellite 110-A. The third antenna 133-3 receives right hand polarized signals 135-A-2 from the second satellite 110-B. The fourth antenna 133-4 receives left-hand polarized signals 135-B-2 from the second satellite 110-B. Thus, each satellite provides right and left hand polarization links to the gateway though four antennas.

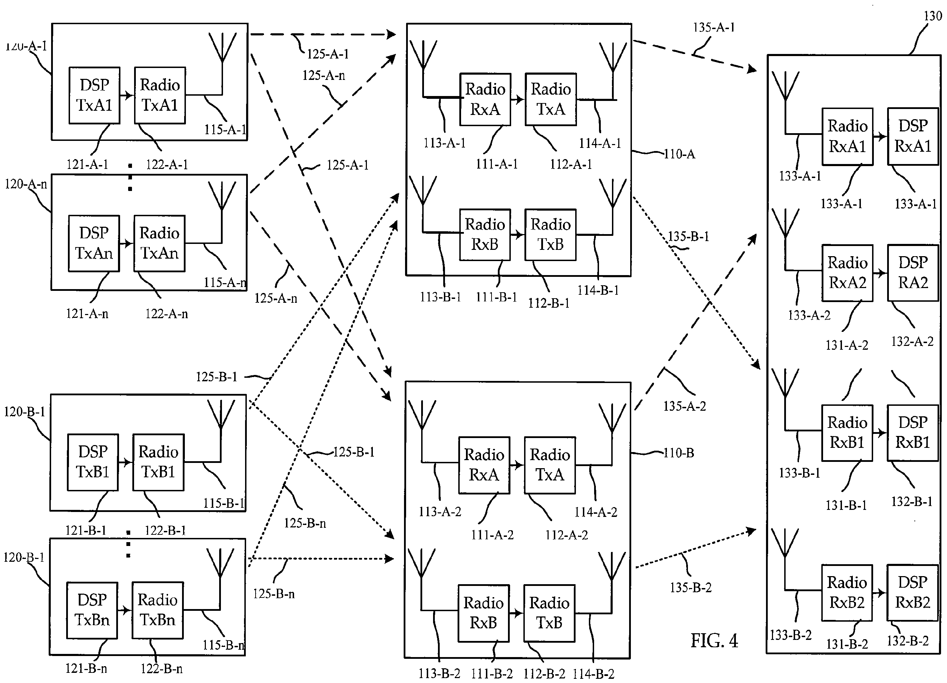

FIG. 4 shows an exemplary block diagram of the satellite communication system shown in FIG. 3. The block diagram is similar to the block diagram shown in FIG. 2, except the gateway now has four antennas 133, radios 131 and signal processors 132.

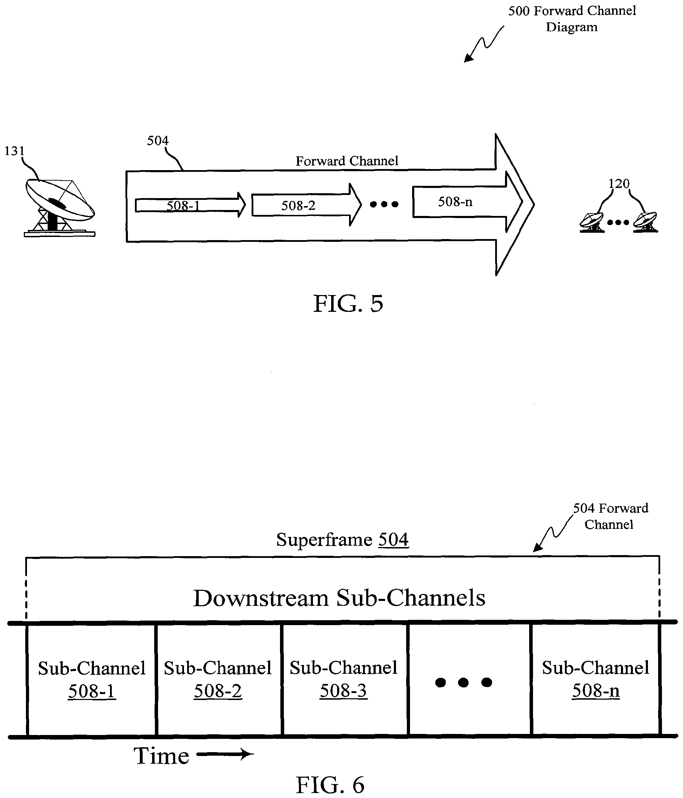

FIG. 5 the forward or downstream channel 500 from the gateway 115 to the subscriber terminals 120 according to another embodiment of the invention. All subscriber terminals 120 may receive the forward channel 504 from a first or second satellite. A fixed symbol rate channel is shared by the different subscriber terminals 130 in this embodiment. However, different consumers could be sent data at different modulation and codepoints depending on their operating signal to noise ratios. Each sub-channel or queue block 208 of the forward channel 204 is destined for a particular subscriber terminal 130 and is denoted by an arrow within the larger arrow of the forward channel 204. Arrows of different sizes convey the differences in coding and modulation that can be done for each sub-channel 208.

As shown in FIG. 6, the system uses a variable length superframe 504 structure to send data on the downstream. Thus, each superframe 504 may include header and framing overhead (not shown) and data intended for different consumers such that every subscriber terminal 120 may receive its own sub-channel 508. In some embodiments, the size of the sub-channels 508 and superframe 504 can vary. For example, the superframe 504 might include two sub-channels 508 each of which contain data at QPSK-2/3 followed by a three sub-channels at 8PSK-8/9.

Different consumers could be sent data at different modulation and codepoints depending on their operating signal to noise ratios. Each sub-channel or queue block 508 of the forward channel 504 is destined for a particular subscriber terminal 120 and is denoted by an arrow within the larger arrow of the forward channel 504. Arrows of different sizes convey the differences in coding and modulation that can be done for each sub-channel 508.

Various other coding and modulation schemes may be employed by the embodiments of the invention. For example, the feeder or service links may be spread spectrum signals. The links may also employ, for example, TDM, TDMA, CDMA, SCDMA, FDM, OFDM, WDM, FHSS, DSSS, or similar multiplexing or channel access schemes.

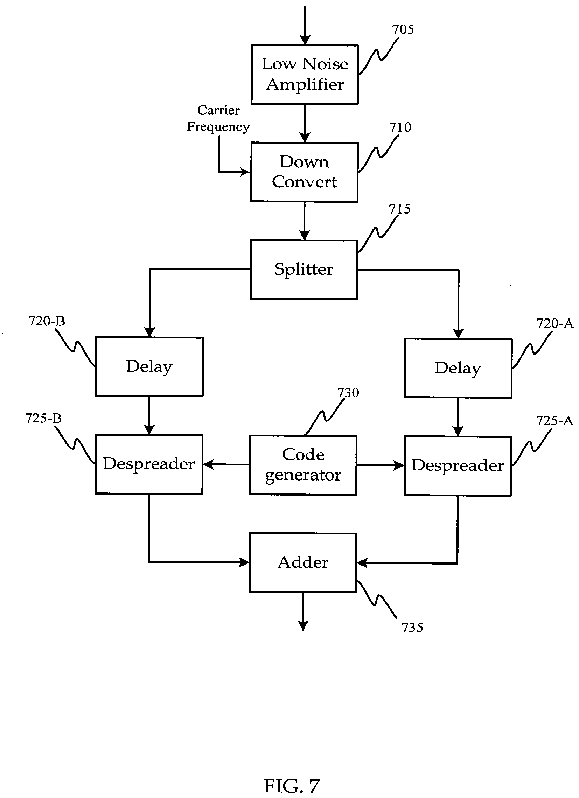

FIG. 7 is a block diagram depicting a method for combining like polarized signals from an antenna at the gateway according to one embodiment of the invention. Referring back to FIG. 1B, the gateway receives right-hand polarized signals from at least two satellites through one antenna and left-hand polarized signals from at least two satellites. The signals, while sent during the same polarization at transmission, may be delayed relative to each other from the different path lengths traveled to the antenna. The two signals may be combined, for example, using a RAKE receiver. The receiver may first amplify the received signal with a low noise amplifier at block 705. This amplified signal may then be down converted at block 1710. The down converter may, for example, use a mixer to combine the signal with a signal from a local oscillator. The signals may be separated at block 715 using, for example, a RAKE receiver. RAKE receivers are well known in the art. The rake receiver may simply determine the delay between the two signals. In some embodiments, the RAKE receiver may use test codes to find the path delay.

One or both of the signals may then be delayed in order to line up the two signals in time at block 720. If the signals are coded using, for example, direct sequence spread spectrum codes or the like, then the respective signals may be despread at block 725 using, for example a code generator 730. In other embodiments, each signal may be demodulated or decoded depending on the modulation scheme used by the system. For example, if the signals are modulated with OFDM the signals may be demodulated using a Fast Fourier transform. Once despread or demodulated the signals may be added at block 735. In one embodiment, the adder 735 may use equal gain combining where each signal is added with equal weight. In another embodiment the signals may be added using maximal ratio combining. The signals may be combined based on the Signal-to-Noise Ratio (SNR) of the combined output.

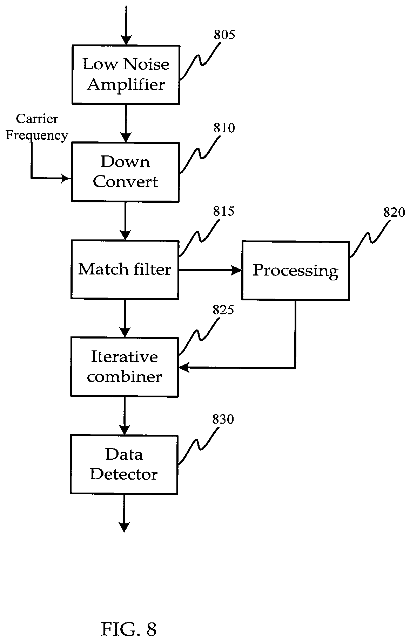

FIG. 8 is a basic block diagram of an example receiver structure 800 suitable for processing a signal comprising contributions from individual signals transmitted from satellites 110-A and 110-B in FIG. 1B. The structure 800 comprises a low noise amplifier (LNA) 804, a down converter (DC) 886, a match filter (MF) 808, an iterative combiner (IC) 810, a processing block (PHASE TIME AMP) 812, and a data detector (DETECT) 814. An antenna 802 accepts a composite signal to be processed by receiver structure 800. In other implementations, input 802 may simply be a port through which the composite signal is delivered from another device. Low noise amplifier 804 amplifies the composite signal and down convert 806 brings the signal down to baseband. The signal, now complex, is filtered by an appropriate match filter 808 and sampled at the rate of once per symbol. The result is a sampled complex output $z(n)$, which is presented to iterative combiner 810 and also presented to processing block 812.

Processing block 812 estimates the phase, time, and amplitude of the various signal path components. The phase and amplitude estimates are represented as $w_l$'s, while the time estimates of the path delay are represented as $\tau_l$'s in the discussion that follows. For a composite signal comprising contributions from L individual signals transmitted over different paths, processing block 812 generates an estimate of $w_l$ and an estimate of $\tau_l$ for each one of the L individual signals. In the embodiment shown in FIG. 1B, L=2. Processing block 812 can be implemented in numerous ways. For example, one technique would be to use an autocorrelation of the received signal and the differently received components will appear as correlation peaks separated in time by the delay spread of the received signal components.

Iterative combiner 810 uses the $w_l$'s and $\tau_l$'s generated by processing block 812 to process the sampled complex output $z(n)$, to produce estimates of the received sequence. Finally, the estimates of the received sequence can be used by detector 814 to create the data stream out of the receiver. Operations of receiver structure 800, especially those of iterative combiner 810 and detector 814, are described in more detail in subsequent sections. Various iterative combining techniques or similar techniques are known in the art and may be used.

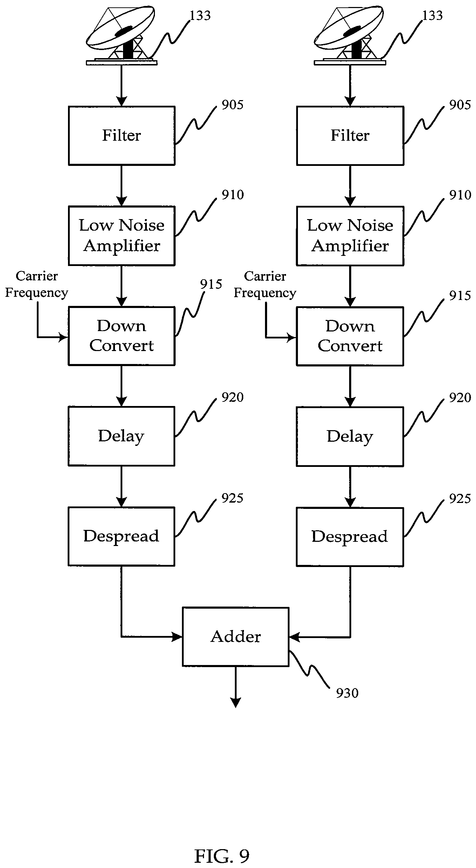

FIG. 9 shows a signal combiner according to another embodiment of the invention. The combiner shown in FIG. 9 may be used with the four antenna gateway embodiment shown in FIG. 3. Each signal is received at two different antennas from two different satellites.

FIG. 9 shows two such antennas 133. The antennas 133 may receive only right or left-hand polarized signals from two separate satellites. Once received, each signal passes through a filter and a low noise amplifier at blocks 905, 910. Each signal is then down converted at block 915. A delay between the signals may be added following the down conversion at block 920. Correlation methods may be used to determine the delay. Test signals may be used to correlate the two signals and provide the proper delay. Once the delay is known, one or both signals may be shifted in time in order to align with the other signal, whereupon the signals may optionally be despread at block 925 prior to combing the signals, are combined at block 930. A soft addition, equal gain combining, maximal ratio combining or the like may be used at the adder.

While embodiments of the invention have described only two satellites in communication with two groups of subscriber terminals and a gateway more than two satellites may be employed. For example, 3, 4, 5, 6, 7 or 8 satellites may be used. The satellites may be in neighboring orbital slots or share the same orbital slot. Each of the satellites my provide polarized and orthogonally polarized signals. In other embodiments, the satellites may provide more than two orthogonal links.

In one embodiment, the present disclosure provides for a satellite communication system that includes space-time codes transmitted through multiple satellites. For instance, a gateway may transmit the same signal from more than one antenna through more than one satellite to a plurality of subscriber terminals. Embodiments of the invention may precorrect the signals at the gateway prior to transmission such that the signals are synchronized when received at the subscriber terminals within a geographic area serviced by the satellites. The precorrection may include providing delays in the signals and/or using an OFDM signal time that is proportional to the longest transmission time difference at the subscriber terminals. Various other embodiments of the invention will be described in detail below.

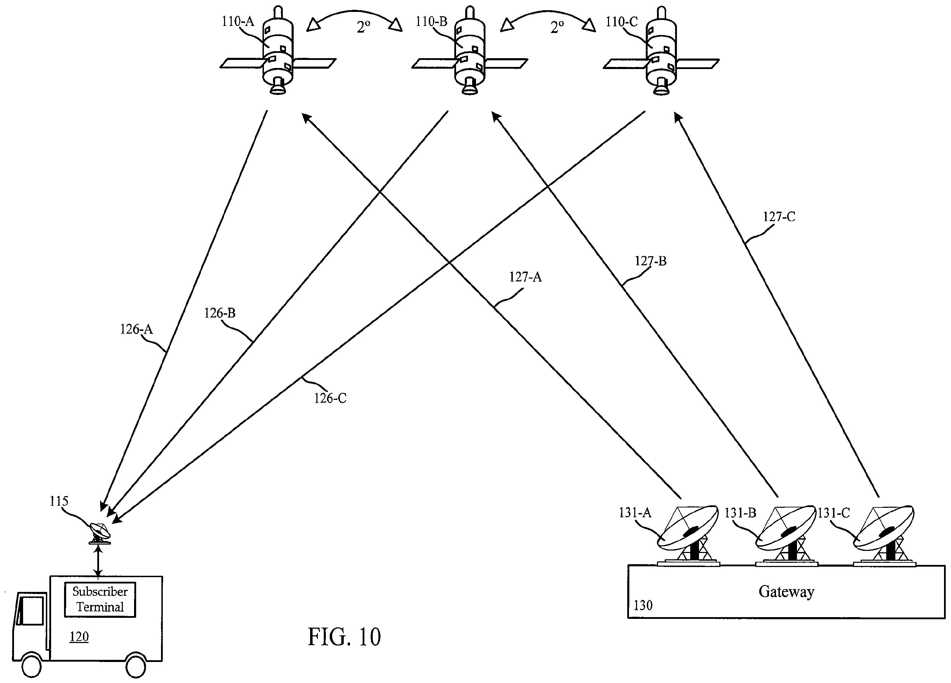

FIG. 10 shows a satellite communication system that includes a gateway 130 with three antennas 131, three satellites 110 and mobile subscriber terminal 120 according to one embodiment of the invention. As shown, the gateway 130 communicates with the subscriber terminal over three feeder links 127 and three service links 126. The figure shows a mobile subscriber terminal 120 as a truck with an antenna 115. Only one subscriber terminal is shown for clarity, any number of subscriber terminals may be used. The subscriber terminal antennas 115 maybe pointed toward a target satellite and/or satellites 110. The antennas 115 may have small apertures and/or large beam widths, for example, the beam width may be 6°. In other embodiments the antennas beam width may be 3°, 4°, 5°, 7°, 8°, 9°, 10°, *etc.* The subscriber terminals 120 may be stationary, mobile, airborne, seaborne, spaceborne, etc. If more than one subscriber terminal 120 is used, these subscriber terminals may be located within a geographic area serviced by the satellites. For example, the subscriber terminals 120 may be located within the continental United States (a CONUS beam) or within a smaller geographic area that depends on the beam size of the satellites 110. Various beams sizes may be employed.

The satellites 110 may operate as relay, switching or bent pipe satellites. In one embodiment, the satellites 110 may receive signals from the gateway 120 and retransmit the signals to the subscriber terminals. The satellites 110 may also be found within different orbital slots, that is, they may be about 2° apart within a geostationary orbit. These orbital slots may be adjacent or neighboring orbital slots. The satellites 110 may transmit signals within overlapping broad and/or narrow beams. The beam sizes may vary between antennas. For example, a first satellite 110-A may have a large beam size while a second satellite 110-B may have a small beam size. While three satellites 110 are shown, various other combinations of satellites may be employed. For example, 2, 4, 5, 6, 7, 8, 9, 10 or more satellites may be used.

Satellites 110 each receive the same signal 127 from three separate antennas 131 at the gateway 130. These signals are transmitted to the subscriber terminal 120 as shown in FIG. 10. Accordingly, the subscriber terminal 120 effectively receives the same signal from three different satellites 110 over three different paths. Because the three signals travel different paths through different satellites, the three signals arrive at the subscriber terminal 120 at different times and can in some cases be considered interference in relation to each other signal.

The three signals may be transmitted using orthogonal frequency-division multiplexing (OFDM). OFDM uses a large number of closely-spaced orthogonal sub-carriers that are modulated with a conventional modulation scheme, for example, quadrature amplitude modulation or phase shift keying, at a low symbol rate. The orthogonal sub-carriers with the allotted frequency band may be determined using a Fast Fourier Transform (FFT). In one embodiment, the symbol time may be significantly longer than the time difference between the longest and shortest paths between the gateway and a subscriber terminal.

The OFDM modulation scheme may be combined with a multiple access scheme such as, for example, using frequency, time or coding, to communicate more than signal to more than one subscriber terminal 120. For example, Orthogonal Frequency Division Multiple Access (OFDMA) may be used. Frequency-division multiple access can be achieved by assigning different OFDM sub-channels to different users. The number of sub-channels assigned to a user may depend on the OFDM symbol time, the needed symbol rate, and/or the quality of service required at the subscriber terminal. As another example, the OFDM signal may be combined with time division multiple-access (TDMA) or time-domain statistical multiplexing by assigning each of the various subscriber terminals a communication timeslot. In another example, code division multiple-access (CDMA) may be employed by assigning a high bandwidth spreading code to each user. Other multiple access techniques may be employed to provide multiple user access to the OFDM signals.

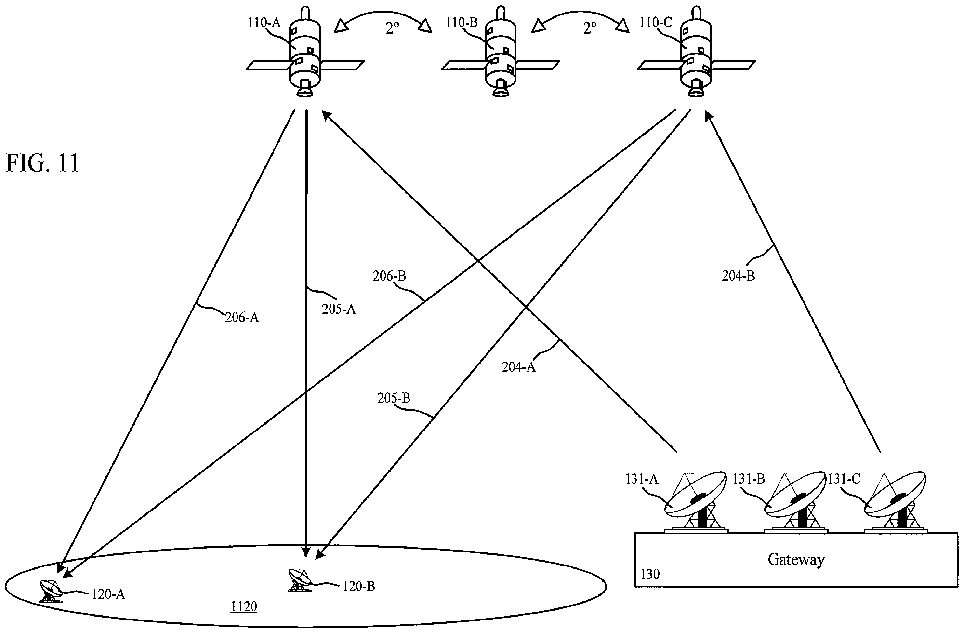

Within a geographic area serviced by the satellites 110, the transmission path difference varies depending on where the subscriber terminal is located within the geographic area. FIG. 11 shows the paths of two signals transmitted from the gateway and received at two different subscriber terminals 120 within a geographic area 1120 according to one embodiment of the invention. The first antenna 131-A at the gateway 130 transmits signals to the first satellite 110-A over a first feeder link path 204-A. The second antenna 131-B at the gateway 130 transmits signals to the third satellite 110-C over a second feeder link path 204-C. Both satellites 110-A, 110-C retransmit signals from the gateway to each subscriber terminal 120 within the geographic area 1120. FIG. 11 shows two subscriber terminals 120-A, 120-B within the geographic area. In this example, the two subscriber terminals 120 receive a signal from the first and second satellites 110-A, 110-C. The difference between the longest and shortest transmission time may be calculated at each subscriber terminal. The largest time difference or average time difference may be used to precorrect for these delays at the gateway. Various embodiments of the present invention may provide methods to compensate or correct for the transmission differences of the signal arriving over the different paths.

To compensate for the transmission delay between the two paths, the OFDM symbol time can be adjusted such that the symbol time is long enough so that symbols within each signal from the three satellites are received at each subscriber terminal during the same period of time. Accordingly, the symbol time may be set proportional to the longest transmission time difference of any subscriber terminal at any point within the geographic area 1120, $T_{symbol} = A \cdot \Delta T$, where $A$ is a constant. In one embodiment of the invention $A$ is $10 \pm 0.5$. In other embodiments, $A$ can be 4, 5, 6, 7, 8, 9, 11, 12, 13, 14, 15 or $16 \pm 0.5$.

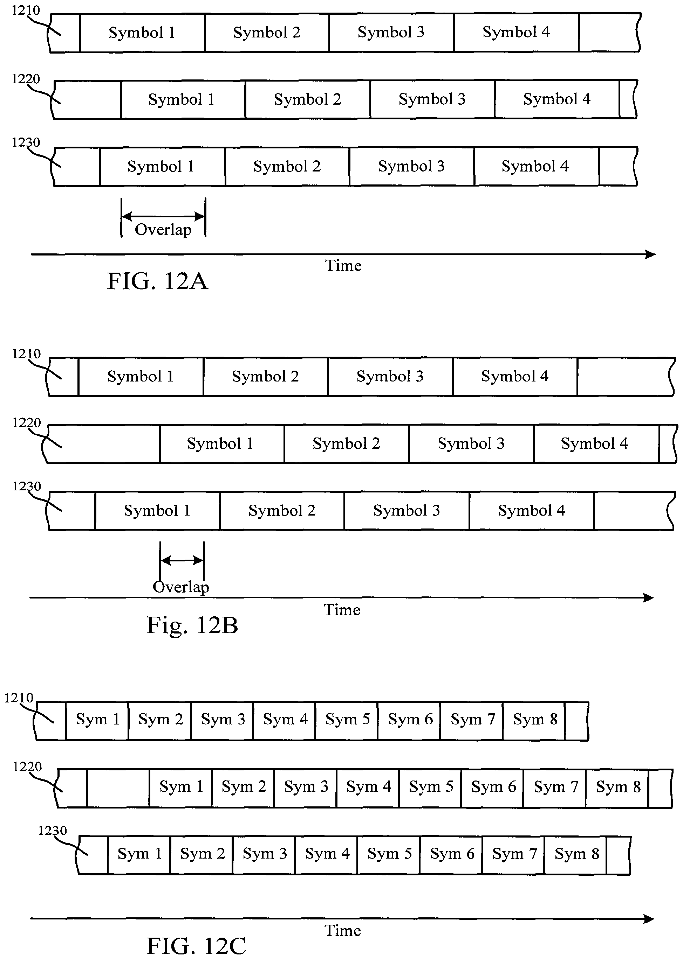

FIGs. 12A and 12B each show three signals 1210, 1220, 1230 received at a subscriber terminal from three satellites with different path delays according to one embodiment of the invention. As shown in FIG. 12A, each corresponding symbol in each signal overlaps the same symbol in the other two signals. The overlap between signals in FIG. 12B is much shorter. Signal 1220 is delayed relative to the other two signals. Increasing the symbol time at the gateway will provide greater overlap between the three signals.

FIG. 12C shows three signals 1210, 1220, 1230 received at a subscriber terminal from three satellites with different path delays and a symbol time that is shorter than the path delay of two of the signals according to one embodiment of the invention. Accordingly, signal 1220 may be considered interference by the other two signals 1210, 1230 and vice-versa. In this case, the symbol time may be lengthened in order to provide sufficient overlap between the symbols. In another embodiment, delays may be added in signals one and three 1210, 1230 to compensate for the misaligned signals. Other precorrection schemes known in the art may be used.

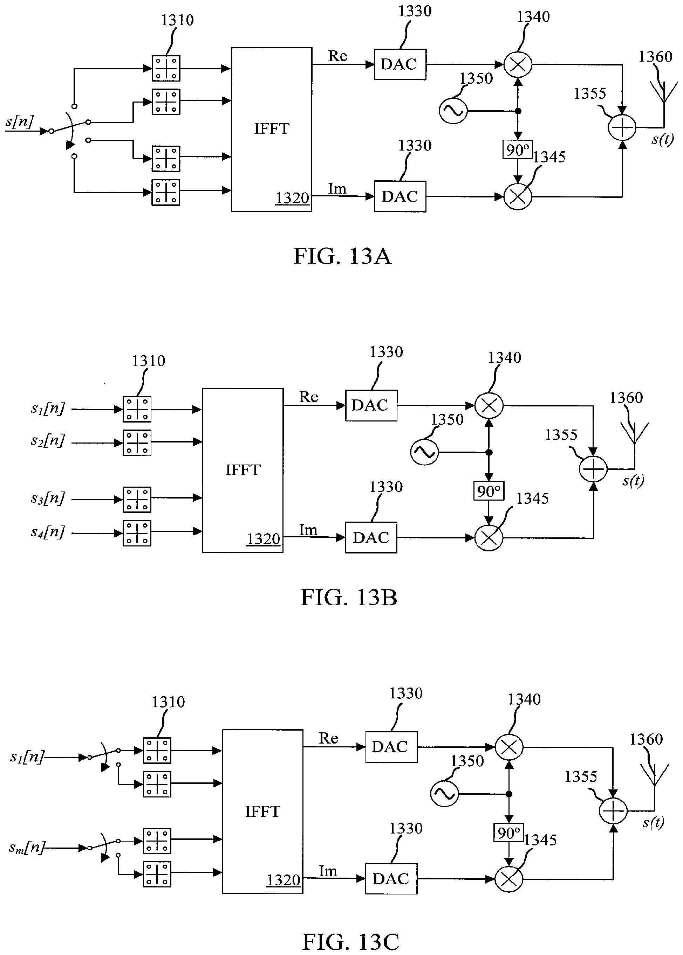

FIG. 13A shows a block diagram of an OFDM transmitter according to one embodiment of the invention. An OFDM carrier signal is the sum of a number of orthogonal sub-carriers, with baseband data or different data on each sub-carrier being independently modulated commonly using some type of quadrature amplitude modulation (QAM), phase-shift keying (PSK), frequency shift keying (FSK) or other digital keying or modulation. This composite baseband signal is typically used to modulate a main RF carrier. The transmitter receives one or more serial signals, $s[n]$. The serial signals, $s[n]$, may be a serial stream of binary digits. The serial signals may be demultiplexed into N parallel streams and each parallel signal mapped to a (possibly complex) symbol stream using some modulation constellation (QAM, PSK, etc.) 1310. The constellations may be different and may carry a higher bit-rate than the other constellations. In other embodiments, multiple serial signals $s[n]_i$ may be received. Each of these serial signals may then be mapped to one or more symbols providing N parallel streams of data.

An inverse FFT 1320 is computed on each set of symbols, giving a set of complex time-domain samples. The FFT also places each of the symbols within a sub-carrier frequency. These samples may be quadrature-mixed to a passband using techniques known in the art. The real and imaginary components are converted to the analogue domain using digital-to-analogue converters (DACs) 1330. These analogue signals are then used to modulate cosine 1340 and sine 1345 waves at the carrier frequency, $f_c$ 1350, respectively. These signals are then summed 1355 to give the transmission signal, s(t) that is transmitted from the antenna 1360. Other OFDM modulation schemes may also be used without deviating from the scope of the present invention.

FIG. 13B shows another block diagram of an OFDM transmitter according to another embodiment of the invention. In this embodiment, a plurality of data streams $S_i[n]$ are each modulated and transmitted on a sub-carrier rather than modulating the same signal onto the various sub-carriers. In another embodiment, multiple data streams may be encoded with a subset of available sub-carriers as shown in FIG 4C. The number of sub-carriers used to transmit a single signal may depend on the symbol time, the required data rate and/or the available bandwidth.

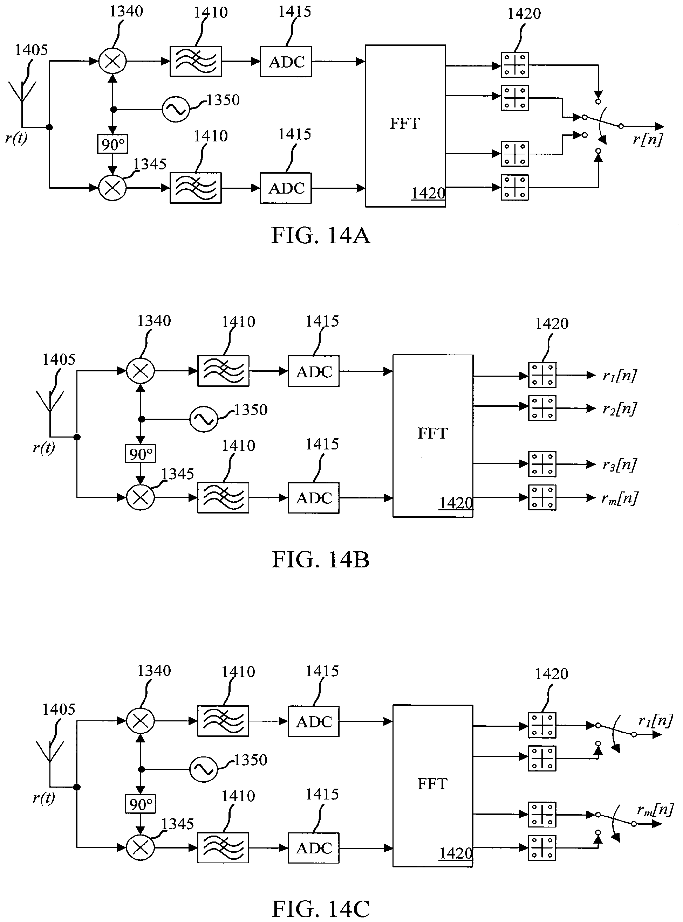

FIG. 14A shows a block diagram of an OFDM receiver according to another embodiment of the invention. The receiver picks up the signal $r(t)$ at an antenna 505, which is then quadrature-mixed down to baseband using cosine 1340 and sine 1345 waves at the carrier frequency, $f_c$ 1350. This also creates signals centered on $2f_c$, so low-pass filters are used to reject signals centered on $2f_c$. The baseband signals are then sampled and digitized using analogue-to-digital converters (ADCs) 1415, and a forward FFT 1420 is used to convert back to the frequency domain. The FFT 1420 returns N parallel streams, each of which is converted to a binary stream using an appropriate symbol detector 530. These streams are then re-combined into a serial stream, *s[n],* which is an estimate of the original binary stream at the transmitter.

FIG. 14B shows a block diagram of another OFDM receiver according to another embodiment of the invention. In this block diagram each sub-carrier of the signal is encoded with a single data stream as shown in FIG. 13B. The receiver provides outputs for each or one of these received signals. In other embodiments of the invention, a subset of the total number of sub-carriers is used to encode a signal and decoded as shown in FIG. 14C. The size of the subset may vary depending on the symbol time, the required data rate and/or the available bandwidth.

If N sub-carriers are used, and each sub-carrier is modulated using M alternative symbols, the OFDM symbol alphabet consists of $M^N$ combined symbols. The low-pass equivalent OFDM signal can be expressed as:

$$v\{t\} = \sum_{k=0}^{N-1} X_k e^{i2\pi k t/T} \, , \, 0 \le t \le T.$$

$X_k$ are the data symbols, *N* is the number of sub-carriers, and *T is* the OFDM symbol time. The sub-carrier spacing of *1/T* makes symbol orthogonal over each symbol period; this property can be expressed as:

$$\frac{1}{T} \int_0^T e^{i2\pi(k_2-k_1)t/T} dt = \begin{cases} 1, & k_1 = k_2 \\ 0, & k_1 \ne k_2 \end{cases}.$$

As shown in FIGs. 13C and 14C, in some embodiments of the invention a number of different signals are transmitted over *n* different orthogonal sub-carriers, where $N = \sum n_i$. A different symbol of the signal may be transmitted over each of the *n* orthogonal sub-carriers. The symbol rate for each of these signals may be determined by $R = \dfrac{n}{T}$. If the symbol time is increased the number of orthogonal sub-carriers over which the can be increased in order to maintain the symbol rate. Accordingly, a single data stream transmitted from the gateway may include a plurality of signals, each signal transmitted of *n* subcarriers.

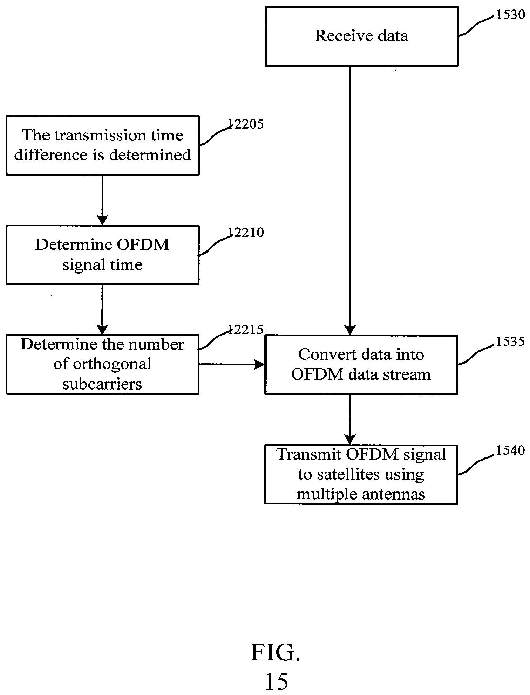

FIG. 15 is a flowchart a method for converting a data stream into an OFDM signal according to one embodiment of the invention. The transmission time difference is determined for subscriber terminals within the geographic area serviced by the satellites at block 1505. The transmission time difference may be determined by noting the amount of time it takes to transmit a signal to each subscriber terminal through each of the different satellites. The difference between the longest and shortest transmission time may be determined at each subscriber terminal or estimated at the gateway. The symbol time of the OFDM signal may then be set proportional to the maximum transmission time difference for subscriber terminals with the geographic area serviced by the satellites as discussed above. In another embodiment of the invention, the transmission time difference may be determined based on hypothetical subscriber terminals found in locations throughout the geographic area serviced by the satellites. In yet another embodiment of the invention, a fixed subscriber terminal that is centrally located within the geographic coverage area may be used to estimate timing pre-corrections.

The OFDM symbol time is then determined at block 1510. The OFDM symbol time may be determined by multiplying the longest transmission difference by a constant, A, such that $T_{symbol} = A \cdot \Delta T$. The constant may depend on the properties of the space time codes employed at the subscriber terminal(s) to receive each symbol from the satellites. The OFDM symbol time may the same for each subscriber terminal within the geographic area or vary depending on the specific transmission differences at each subscriber terminal.

The number of orthogonal sub-carriers required to carry the signal at the proper data rate may then be determined at block 1515. The number of orthogonal sub-carriers may be determined by $n = R \cdot T_{symbol}$.

The determining steps in blocks 1505, 1510, 1515 may be dynamically performed as the transmission difference varies over time, for example, with a mobile subscriber terminal. In other embodiments, the determining steps may be determined for the geographic area serviced by the satellites and set until adjusted or based on a fixed reference terminal.

A data stream is received at block 1530. The data stream is then converted into an OFDM stream using the OFDM time from block 1510 and the number OFDM sub-carriers from block 1515. Various coding and modulating techniques may be used as well as an inverse Fourier transform. The OFDM signal is then transmitted from the gateway to multiple satellites using multiple antennas at block 1540.

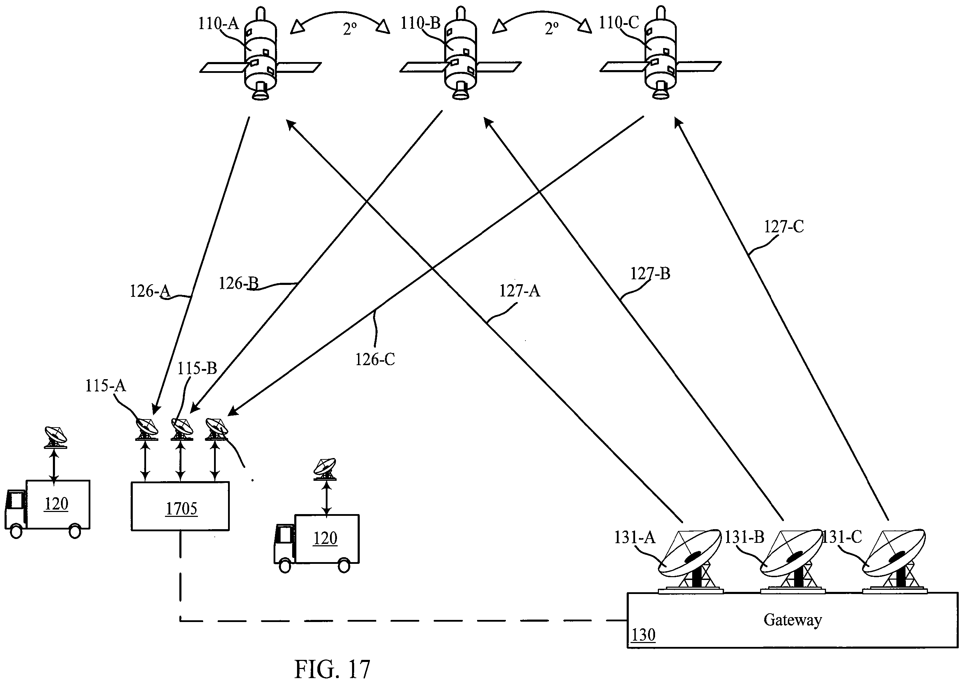

FIG. 17 shows a satellite communication system with a broad-beam subscriber reference terminal 1705 according to one embodiment of the invention. The reference terminal 1705 is provided in a fixed (or, alternately, known) location and includes a single antenna 115 pointed toward all three satellites 110. The antenna may include a small aperture and a wide beam width, for example, 6°. The reference terminal 1705 may also transmit signals to one or more mobile subscriber terminals 120, either directly using a local transmission scheme, or indirectly via the satellite communication system. The fixed reference terminal 1705 provides the gateway 130 with the proper synchronization necessary to set up the space time codes that can be used with the mobile terminals 120 in the neighborhood around the reference terminal 1705. Communication between the satellites 110 and the mobile subscriber terminals 120 are not shown in this figure for clarity. The signal delay may be provided to the gateway 130 through a return channel. As shown in the figure, the return channel may be a terrestrial channel 1710, for example, over the Internet. In other embodiments, the return channel may occur through one of the satellites 110. Signal delay information may be determined by transmitting previously determined codes periodically throughout transmission. The reference terminal may use these codes to determine the relative delay between the signals received from the three satellites 110. The delay information may be used to precorrect the signals at the gateway. The precorrection may include lengthening the OFDM symbol time and/or the number of sub-carriers within an OFDM signal. In another embodiment, delays may be introduced within one or more of the signals. Various other precorrection schemes known in the art may also be used at the gateway.

In another embodiment of the invention, the reference terminal 1705 is used solely to provide timing corrections to the gateway. For instance, the reference terminal 1705 may be provided centrally within a geographic area serviced by the satellites 110. Having the reference terminal 1705 so positioned, the reference terminal 1705 may provide a reasonable average timing delay to the gateway 130 for subscriber terminals 120 located within the geographic area serviced by the satellites 110. While the signals received at each subscriber terminal 120 may have different delays, the average timing delay may provide a reasonable estimate of the timing delay required for subscriber terminals within the geographic area near the reference terminal. This geographic area may be a spot beam coverage area covered by the satellites 110. The geographic area may also include cells within the beam area of the satellites according to another embodiment of the invention. Each of the cells may have roughly the same delay profile. The cell may include a three dimensional volume wherein the correction calculated for the reference terminal may be applied to the whole cell.

In yet another embodiment of the invention, one or more of the mobile terminals may determine parameters of the precorrection such as the delay between signals. If more than one mobile terminal is used, then an average or composite correction may be used at the gateway.

FIG. 17 shows a satellite communication system with a narrow-beam reference terminal 1705 with three antennas 115 according to another embodiment of the invention. These three antennas may be large aperture antennas 115 and pointed to communicate with only a single satellite 110. Here separate antennas are used at the gateway and at the reference terminal 1705 for each signal. This technique may take advantage of large signal to noise ratios due to the large aperture antennas 115. In another embodiment of the invention, the gateway 130 itself may act as a reference terminal 1705 and provide delay and precorrection data, if the subscriber terminals 120 are located in the same geographical area so that their delay profile will be consistent with the gateway 130.

Some embodiments of the invention disclose using three antennas at the gateway to transmit three signals through three satellites. In other embodiments of the invention, the gateway transmits 2, 4, 5, 6, 7, 8, 9, 10 or more signals through 2, 3, 4, 5, 6, 7, 8, 9, 10 or more satellites.

Embodiments of the invention may also include mobile subscriber terminals, airborne subscriber terminals, seaborne subscriber terminals, spaceborne subscriber terminals and/or fixed subscriber terminals. The subscriber terminals may also include GPS devices that determine the location of the subscriber terminal within the geographic area serviced by the satellites. This GPS data may be sent to the gateway to determine and/or estimate precorrection and/or timing of OFDM or other signals.

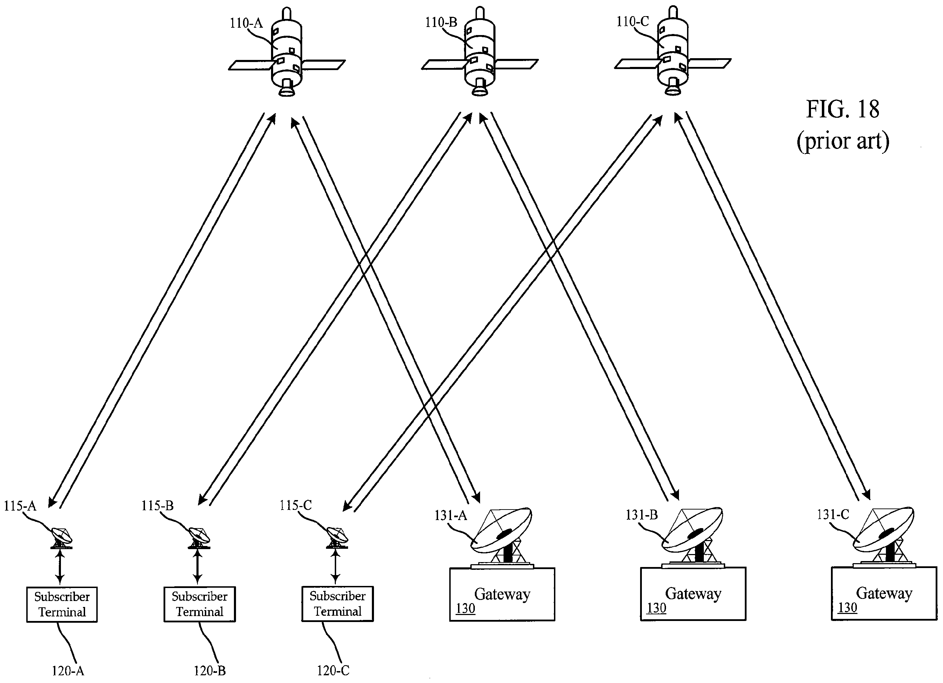

Embodiments of the present disclosure provide for a satellite communication system that utilizes multiple satellites for communication between, for example, subscriber terminals and a gateway. FIG. 18 depicts a common satellite communication system showing multiple subscriber terminals 120, each of which communicate with a gateway 130 through a satellite 110. As shown, a first subscriber terminal 120-A communicates with a first gateway 130-A through a first link established through a first satellite 110-A. Also shown is a second subscriber terminal 120-B that communicates with a second gateway 130-B through a second link established through a second satellite 110-B. A third subscriber terminal 120-C communicates with a third gateway 130-C through a third link established through a third satellite 110-C. Thus, each of the three subscriber terminals 120 independently communicates with a gateway 130 through one of the three satellites 110. In practice, each gateway would service a number of terminals, which are not shown for clarity.

Each of the antennas 115 at the three subscriber terminals 120 and/or each of the antennas 131 of the gateways 130 are pointed toward a corresponding satellite. For instance the antenna 115-A at the first subscriber terminal 120-A is pointed at the first satellite 110-A, and so on. The operators of the gateways 130 and/or the subscriber terminals 120 may lease or purchase communication access through the corresponding satellite 110. This leased access may provide the operators the necessary coding and/or encryption schemes in order to communicate through the satellite link. The three satellites may be within the same orbital slot, in adjacent orbital slots, or in neighboring orbital slots.

Signals received at the gateway antenna 131-B from the first satellite 110-A and the third satellite 110-C may be considered interference by the second gateway antenna 131-B. Similarly, signals received at the first gateway antenna 131-A from the second satellite 110-B and the third satellite 110-C may be considered interference by the first gateway antenna 131-A. Signals received at the third gateway antenna 131-C from the second satellite 110-B and the first satellite 110-A may be considered interference by the third gateway antenna 131-C.

Despite each subscriber terminal being pointed at a primary satellite, off axis signals may be received from a secondary satellite. For example, from the point of view of the first subscriber terminal 120-A the first satellite 110-A is the primary satellite. The first subscriber terminal 120-A may be pointed toward the first satellite 110-A. Moreover, the first subscriber terminal 110-A may lease or purchase access to communications with the first satellite 110-A or be provided access to the communications with the first satellite 110-A. The second satellite 110-B and the third satellite 120-C may be considered secondary satellites to the first subscriber terminal 110-A. The first gateway antenna 131-A may be pointed toward the first satellite 110-A and may consider the first satellite 110-A the primary satellite and the second and third satellites 110-B, 110-C secondary satellites.

One embodiment of the invention provides for a subscriber terminal that receives a composite signal that includes signals from a first and second satellite. A first signal may be a primary signal received from a first satellite. A second signal may include a primary signal and a version of the first signal both received from a second satellite. The subscriber terminal may isolate and subtract the primary signal from the composite signal. Various interference cancellation techniques may be used to isolate and remove the primary signal from the composite signal.

Another embodiment of the invention may include a third satellite. The composite signal may include another primary signal from another user and a version of the first signal from received from the third satellite. The subscriber terminal may isolate and subtract the primary signal received from the third satellite from the composite signal.

Another embodiment of the invention provides for a subscriber terminal that receives a first signal from a first satellite and a second signal from a second satellite. The first signal may include a primary component and a secondary component. The second signal may also include a primary and secondary signal. The first and second secondary signals may be transmitted from the same transmitter, gateway or user terminal and may originate from the same signal. The secondary signals may be isolated from the composite signal using any of various interference canceling techniques known in the art and subtracted from the composite signal. The gateway and/or subscriber terminals may not have leased access to or been authorized to use the first and/or second satellites.

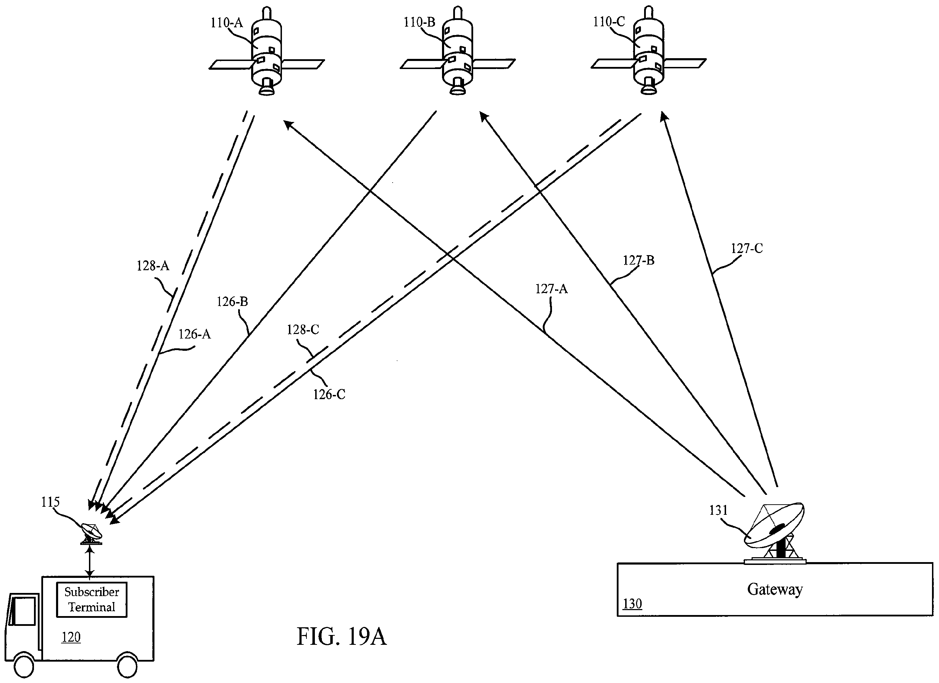

FIG. 19A shows a satellite communication system according to one embodiment of the invention. A subscriber terminal 120 includes an antenna 115. In this figure, the subscriber terminal 120 is a mobile subscriber terminal mounted on a truck. In other embodiments the subscriber terminal may be stationary, spaceborne, airborne, and/or seaborne. While not shown in FIG. 19A, more than one subscriber terminal may be included. The subscriber terminal 120 communicates with a gateway 130 using a single gateway antenna 131 through a primary satellite 110-B and two secondary satellites 110-A, 110-C over return service link 126 and return feeder link 127.

The subscriber terminal antenna 115 may include a small aperture antenna 115. The antenna 115 may also be pointable. The antenna may also have a relatively large beam width. For example, the beam width may be 1°, 2°, 3°, 4°, 5°, 6°, 7°, 8°, 9°, 10°, 11° or 12° including fractions thereof. In other embodiments, the beam width may be larger than 12°.

For purposes of this embodiment, the second satellite 110-B is the primary satellite and the other two satellites are secondary satellites 110-A, 110-C. The satellites 110 may be positioned within adjacent orbital slots. Accordingly, the satellites may be separated by at least 2°. In another embodiment, the satellites 110 may be in non-adjacent orbital slots. In yet another embodiment two or more of the satellites 110 may also be within the same orbital slot or in neighboring orbital slots. More than one secondary satellites may also be used. For example, 1, 2, 3, 4, 5, 6, 7,.8, 9 or 10 secondary satellites may be used and may be located in the same, adjacent and/or nonadjacent orbital slots.

The subscriber terminal antenna 115 may be pointed toward the primary satellite 110-B. Similarly, the gateway antenna 13 may also be pointed toward the primary satellite 110-B. The operators of the gateway 130 or the subscriber terminals may lease or be provided access to the primary satellite 110-B. This leased access may provide a satellite transmission relay between the gateway 130 and the subscriber terminal 120. In this embodiment of the invention, however, the gateway 130 may not lease access to the secondary satellites 110-A, 110-C. The subscriber terminal 120 may know the operating parameters of the secondary satellites 110-A, 110-C. For example, the subscriber terminal 120 may know the access and code structures used in communication using satellites 110-A, 110-C. Moreover, the subscriber terminal 120 may know the communication parameters used to modulate and/or encode the signals sent over the secondary satellites 110-A, 110-C. In one embodiment of the invention, the subscriber terminal 120 may not know how to decrypt the data encoded and transmitted through the secondary satellites 110-A, 110-C. In one embodiment, a commercial encoder/decoder may be used to decode signals from the secondary satellites 110-A, 110-C.

The gateway 120 broadcasts a signal 127 to all three satellites 110 using a single antenna 131. While the gateway antenna 131 is pointed toward primary satellite 110-B and transmits a signal 127-B toward the primary satellite 110-B, off axis signals from the antenna 131 may be received at the secondary satellites 110-A, 110-C. Secondary satellites 110-A, 110-C may receive and transmit signals unrelated to the signals from the gateway 126-A, 126-B. For instance, various other users have leased or purchased access to secondary satellites 110-A, 110-C. The operator(s) of the subscriber terminal 120 and the operators of the gateway 130 may not have leased access to the secondary satellites 110-A, 110-C for the purposes of communication between the gateway 130 and the subscriber terminal 120. Despite not leasing or purchasing access to the secondary satellites 110-A, 110-C, off-axis signals 127-A, 127-C from the gateway 130 are received by the secondary satellites 110-A, 110-C and retransmitted to the subscriber terminal 120 through the secondary antennas 131-A, 131-C. It is assumed that a signal will be employed that does not interfere with the primary use of satellites 110-A and 110-C. This can be implemented by deploying spread spectrum signals, and/or lowering the power below that of the primary user, etc.

Secondary satellites 110-A, 110-C receive primary signals from other transmitters that are rebroadcast to the subscriber terminal 120. These signals are the primary signals for the secondary satellites. These signals 128 are retransmitted from the secondary satellites 110-A, 110-C to the subscriber terminal 120 and interfere with the secondary signals 126 rebroadcast the gateway 130. Thus, a composite signal may be received at the subscriber terminal that includes signals from the gateway 130 and various other transmitters.

Other embodiments of the invention may include a system with 2, 4, 5, 6, 7, 8, 9, 10, 11, or more satellites. Accordingly, the subscriber terminal 120 may receive a composite signal with many other signals other than the primary signal transmitted from the gateway 130.

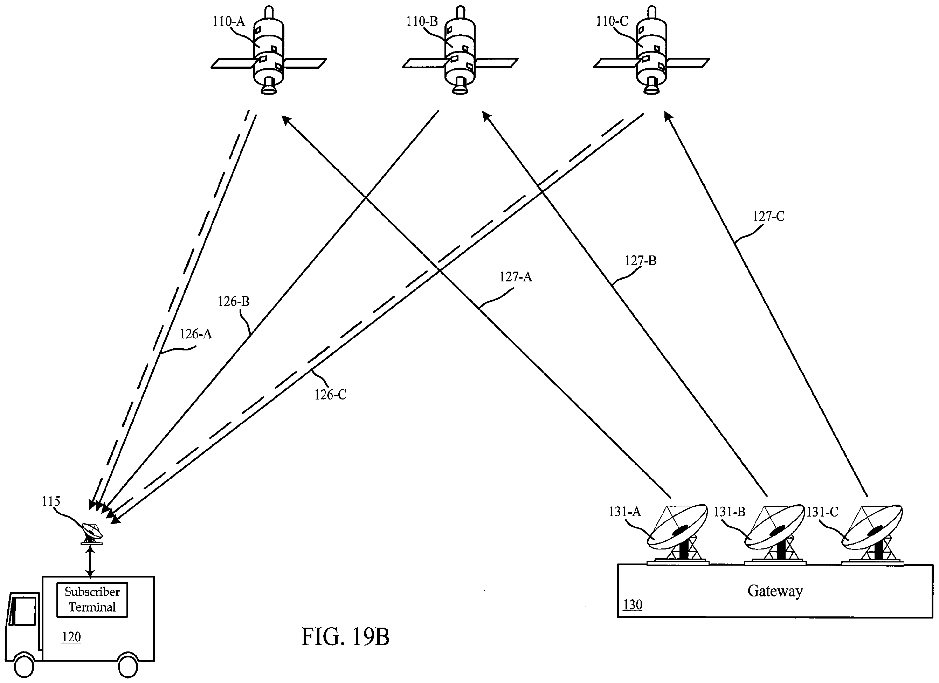

FIG. 19B shows another satellite communication system according to another embodiment of the invention. In this embodiment of the invention, the gateway 130 includes three antennas 131 that are each pointed toward one of the three satellites 110 shown in the figure. In this embodiment of the invention, access to the any of the three satellites 110 may be leased or unleased. Moreover, any of the three satellites 110 may also receive signals from other transmitters, gateways or subscriber terminals that are also rebroadcast to the subscriber terminal 120. It is assumed that a signal will be employed that does not interfere with the primary use of satellites 110-A and 110-C. This can be implemented by deploying spread spectrum signals, and/or lowering the power below that of the primary user, etc.

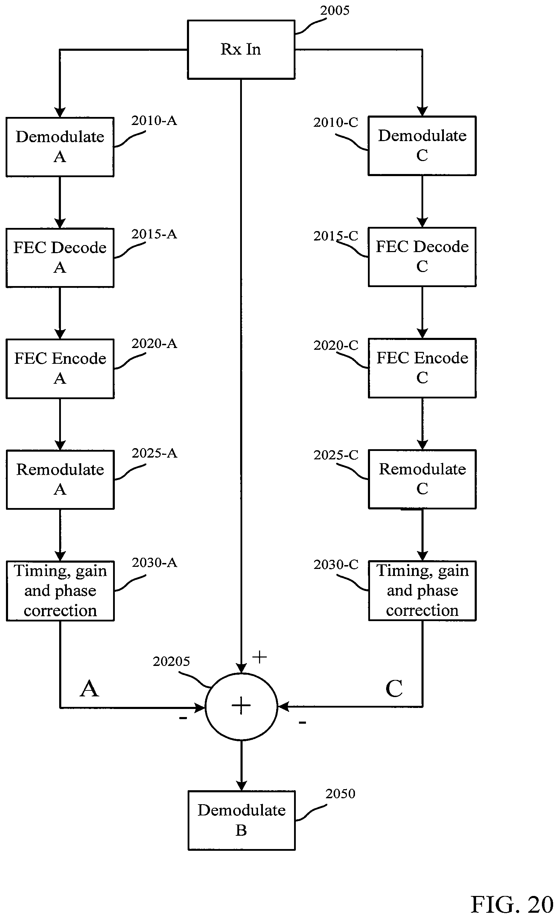

FIG. 20 shows a flowchart of a method for combining three signals (A, B, and C) that are received as a composite signal at the subscriber terminal 120 through the satellites 110 according to one embodiment of the invention. A composite signal is received from the three satellites at block 2005. The signal is split into three signals to remove the interfering signals from the composite signal. Two of the signals are individually demodulated at blocks 2010 to isolate the secondary signals. The demodulated signals may be FEC decoded at blocks 2015 using any type of commonly used FEC decoder such as, but not limited to, convolutional decoder, block decoder or turbo (iterative) decoder. The symbols may then be FEC encoded at blocks 2020 and remodulated where it is reshaped into a replica of the primary component of the received waveform at blocks 2025. The remod-demod and decode-encode steps isolate the interfering signals A and C from the composite signals received from the three satellites. Those skilled in the art will recognize that there are various other ways to isolate these signals without deviating from spirit and scope of the present invention. For example, various interference removal techniques may be employed.

Once isolated, the timing, phase and/or gain may be corrected at block 2030. Interfering signals A and C may then be subtracted from the composite signal received from the satellites at blocks 2035. A delay may be added to the signals in order to counteract any path length variations. Once the interfering signals have been subtracted the resulting signal may then be demodulated and decoded at block 2050.

The composite signal received at the gateway may be decoded and/or demodulated using a RAKE receiver. The RAKE receiver may include three paths or prongs corresponding to the signals received from the three satellites. Moreover, other interference cancelling techniques are known in the art that may be employed to remove interference signals from the composite signal. For example, iterative combining may be employed.

The embodiment of the invention shown in FIGs. 19A and 19B show a signal subscriber terminal. In other embodiments a plurality of subscriber terminals may be in communication with the gateway through the three relay satellites. Spread spectrum signals may be used to spread the signals across frequency and/or time. Various coding and/or multiplexing schemes may also be employed. For example, the signals may be OFDM, FDM, CDMA, or the like.

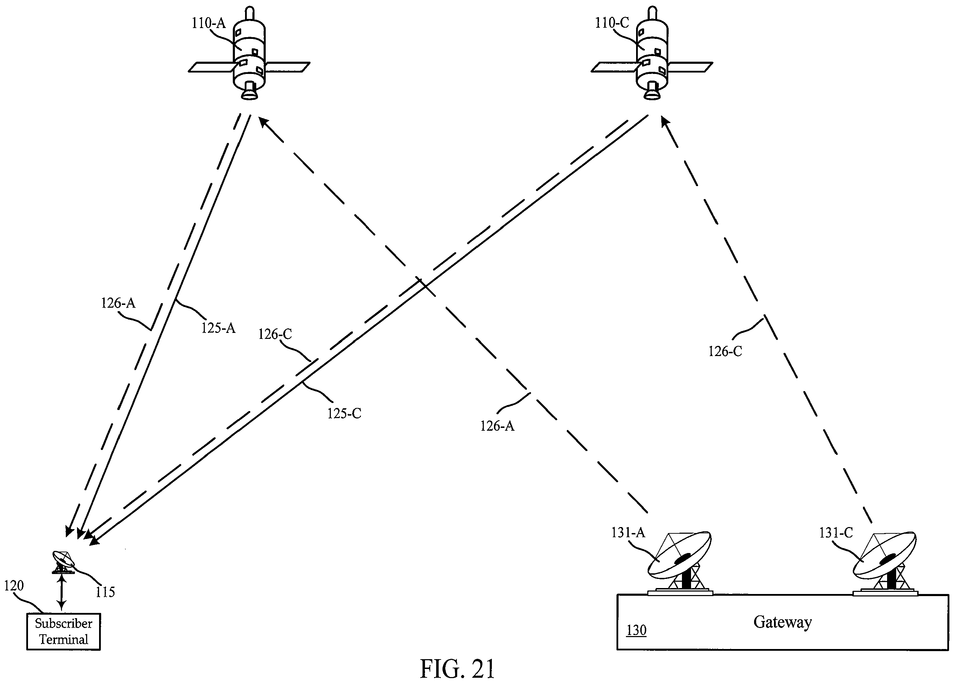

FIG. 21 shows another satellite communication system according to another embodiment of the invention. According to this embodiment of the invention, gateway 130 transmits signals 126 to the subscriber terminal 120 through two secondary satellites 110-A, 110-B. According to this embodiment of the invention, the gateway 130 and/or subscriber terminal 120 does not transmit signals to a primary satellite. Both secondary satellites 110-A, 110-C do not provide leased access to the subscriber terminal and/or to the gateway. These signals are then rebroadcast to the subscriber terminal 120 and are received as a composite signal that includes signals 125 that are signals from another gateway, transmitter or subscriber terminal.

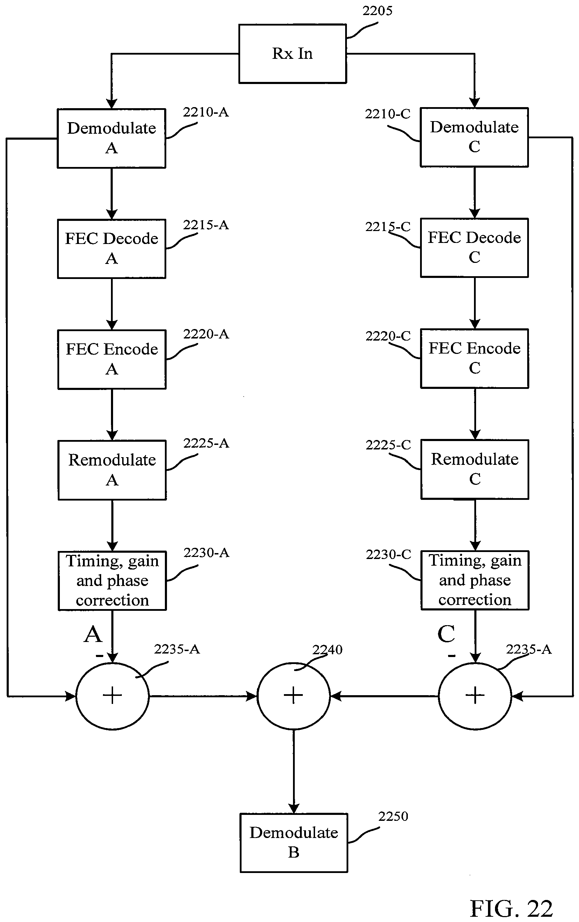

FIG. 22 shows a flow chart for isolating and adding the signals received from the secondary satellites 110-A, 110-C shown in FIG. 21 according to another embodiment of the invention. The signals may be received and processed, for example, at a subscriber terminal. Primary signal A is received at the first secondary satellite 110-A and primary signal C is received at the second secondary satellite 110-C. Both secondary satellites also receive signal B as a secondary signal. The goal of the flow chart is to isolate the secondary signals by subtracting out the primary signals and then combining the secondary signals. The composite signal is received at subscriber terminal at block 2205. The primary signals, signal A and signal C, are then demodulated at blocks 2210 and decoded at blocks 2215. The primary signals are then recoded at blocks 2220 and remodulated at blocks 2225. The primary signals are then subtracted from the received signal at block 2235. Once subtracted, the secondary signal, signal B, is left and the signals may be added using maximal ratio combining or any other soft combining in block 2240. Signal B may be demodulated at block 2250. A delay in one or both channels may be introduced as well. Timing, gain, and/or phase correction may also occur within each channel at blocks 2230.

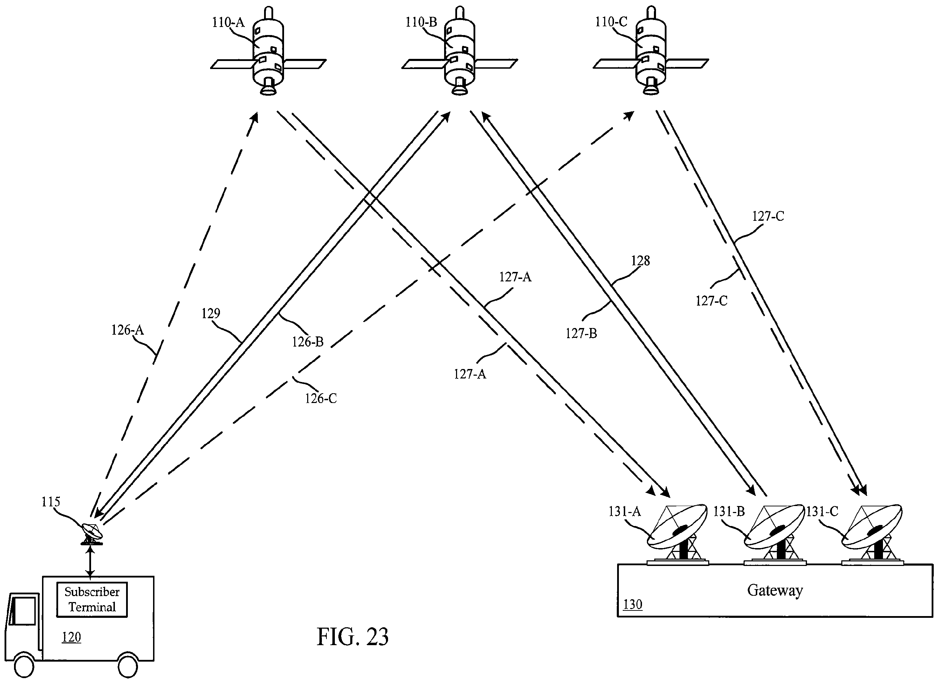

FIG. 23 shows a satellite communication system according to one embodiment of the invention. A subscriber terminal 120 includes an antenna 115. In this embodiment, the subscriber terminal is a mobile subscriber terminal mounted on a truck. In other embodiments the subscriber terminal may stationary, spaceborne, seaborne, or airborne. While not shown in FIG. 23, more than one subscriber terminal may be used. The subscriber terminal 120 communicates with a gateway 130 using a gateway antenna 131-B through a primary satellite 110-B over return service link 126-B and return feeder link 127-B. The gateway 130 communicates with the subscriber terminal over forward feeder links 128 and forward service links 129.

The gateway 130 may be connected to a network (not shown). The network may be any type of network and can include, for example, the Internet, an IP network, an intranet, a wide-area network ("WAN"), a local-area network ("LAN"), a virtual private network, the Public Switched Telephone Network ("PSTN"), a cluster of computers, and/or any other type of network supporting data communication between devices described herein, in different embodiments. A network may include both wired and wireless connections, including optical links. Many other examples are possible and apparent to those skilled in the art in light of this disclosure. As illustrated in a number of embodiments, the network may connect the gateway 130 with other gateways (not pictured), which are also in communication with satellites 110.

The subscriber terminal antenna 115 may have a small aperture due to a number of reasons such as portability, ease of deployment, etc. Thus, the antenna may also have a relatively large beam width. For example, the beam width may be 4°, 5°, 6°, 7°, 8°, 9°, 10°, 11° or 12° and fractions thereof. In other embodiments, the beam width may be larger than 12°.

For purposes of presenting this embodiment, the second satellite 110-B is the primary satellite, the other two satellites are secondary satellites 110-A, 110-C. The satellites 110 may be positioned within adjacent orbital slots. Accordingly, the satellites may be separated by at least 2°. In another embodiment, the satellites 110 may be in non-adjacent orbital slots. In yet another embodiment two or more of the satellites 110 may also be within the same orbital slot. More than one secondary satellites may also be used. For example, 1, 2, 3, 4, 5, 6, 7, 8, 9 or 10 secondary satellites may be used and may be located in the same, adjacent and/or nonadjacent orbital slots.

The subscriber terminal antenna 115 may be pointed toward the primary satellite 110-B. Similarly, the middle gateway antenna 131-B may also be pointed toward the primary satellite 110-B. The operators of the gateway 130 may lease access to the primary satellite 110-B. This primary access may provide a satellite transmission relay between the gateway 130 and the subscriber terminal 120. The gateway 130 may not lease access to the secondary satellites 110-A, 110-C shown in the figure. The gateway may, however, know the operating parameters of the secondary satellites 110-A, 110-C. For example, the gateway or gateway operators may know the access and code structure used in communication using satellites 110-A, 110-C. Moreover, the gateway may know the communication parameters used to modulate and/or encode the signals sent over the secondary satellites 110-A, 110-C. In one embodiment of the invention, the gateway or gateway operators may not know how to decrypt the data encoded and transmitted through the secondary satellites 110-A, 110-C. In one embodiment, a commercial encoder/decoder may be used to decode signals from the secondary satellites 110-A, 110-C.

The subscriber terminal 120 broadcasts a return link signal 126 to all three satellites 110. While the subscriber terminal antenna 115 is pointed toward satellite 110-B and primarily transmits a signal 126-B toward the primary satellite 110-B, off axis signals from the antenna 115 may be broadcast to the secondary satellites 110-A, 110-C. Secondary satellites 110-A, 110-C receive and transmit signals unrelated to the signals 126-A, 126-B received from the subscriber terminal 120. For instance, various other users have leased or purchased access to secondary satellites 110-A, 110-C. The operator(s) of the subscriber terminal 120 and the operators of the gateway 130 have not leased access to the secondary satellites 110-A, 110-C for the purposes of communication between the gateway 130 and the subscriber terminal 120. Despite not leasing or purchasing access to the secondary satellites 110-A, 110-C, off-axis signals 126-A, 126-B from subscriber terminal 120 are received by the secondary satellites 110-A, 110-C and retransmitted to the gateway 130 through antennas 131-A, 131-C.

Primary signals are also received at the secondary satellites 110-A, 110-C and rebroadcast. These signals are received from an intended subscriber terminal (not shown) and may interfere with the secondary signals from the subscriber terminal. The signals from the intended subscriber terminals and the subscriber terminal 120 will be transmitted to the gateway as a composite signal 127-A, 127-C.

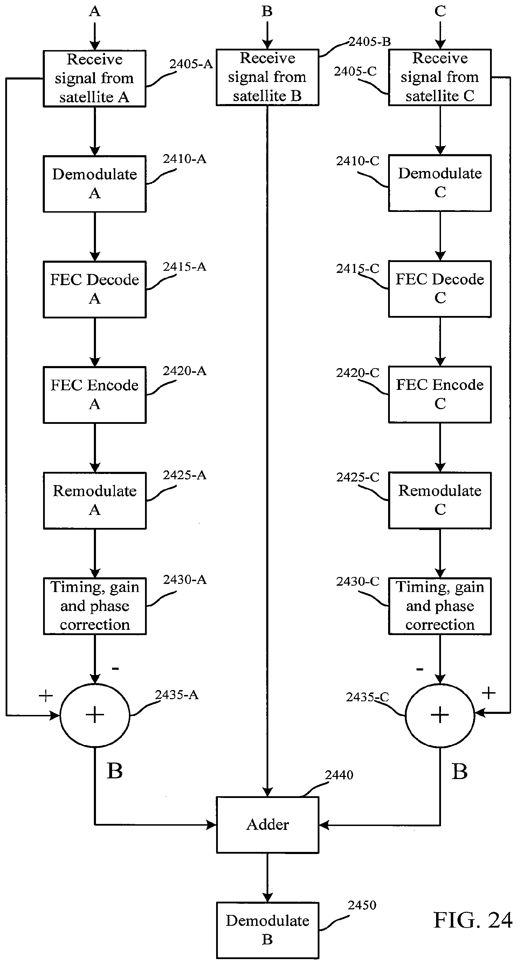

FIG. 24 shows a flowchart showing a method for combining signals A, B, and C received from the subscriber terminal 120 through the satellites 110 according to one embodiment of the invention. Signals are received from the three satellites at blocks 2405. The signals received from the secondary satellites 110-A, 110-C are each independently received and processed to remove the primary signal using interference removal techniques. The signals are individually demodulated at blocks 2410. The demodulated signals may be FEC decoded at blocks 2415 using any type of commonly used FEC decoder such as, but not limited to, convolutional decoder, block decoder or turbo (iterative) decoder. The symbols may then be FEC encoded at blocks 2420 and remodulated where it is reshaped into a replica of the primary component of the received waveform at blocks 2425. The remod-demod and decode-encode steps isolate the primary A and C signals from the signals received from the secondary satellites. Those skilled in the art will recognize that there are various other ways to isolate these signals without deviating from spirit of the present invention. For example, various interference removal techniques may be employed.

Once isolated, the timing, phase and/or gain may be corrected at block 2430. Isolated signals A and C may then be subtracted from the signals received from the secondary satellites at blocks 2435. Specifically, isolated signal A is subtracted from the signal received from the first secondary satellite 110-A. Isolated signal C is subtracted from the signal received from the second secondary satellite 110-C. Moreover, a delay may be adjusted to the signals in order to counteract any path length variations. Once the isolated primary signal has been subtracted the secondary signals remain and may be added with the signal received from the primary satellite 110-B at block 2440. Signal B may then be demodulated and decoded at block 2450. In another embodiment of the invention delays appropriate to the various versions of the signal of interest may be introduced in order to align the signals prior to the adder.

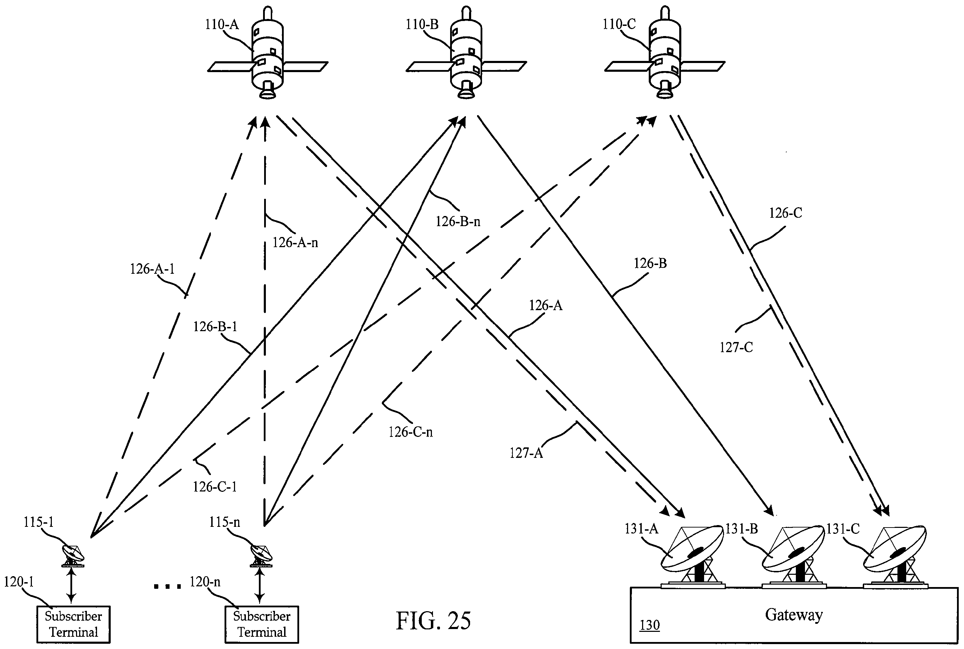

FIG. 25 shows a satellite communication system with multiple subscriber terminals according to one embodiment of the invention. According to this embodiment of the invention multiple subscriber terminals 120 communicate with gateway 130 through satellites 110. Each subscriber terminal 120 is similar to the subscriber terminal describe in conjunction with FIG. 23. That is, each subscriber terminal 120 broadcasts a return link signals 126 to all three satellites 110. While the subscriber terminal antennas 115 are pointed toward satellite 110-B and primarily transmit a signal 126-B toward the primary satellite 110-B, off axis signals from the antenna 115 may be broadcast to the secondary satellites 110-A, 110-C. All three signals are then retransmitted from the satellites 110 to the gateway 130. The various signals may be encoded using OFDM, TDMA, SCDMA, or other coding techniques and/or spread spectrum techniques.

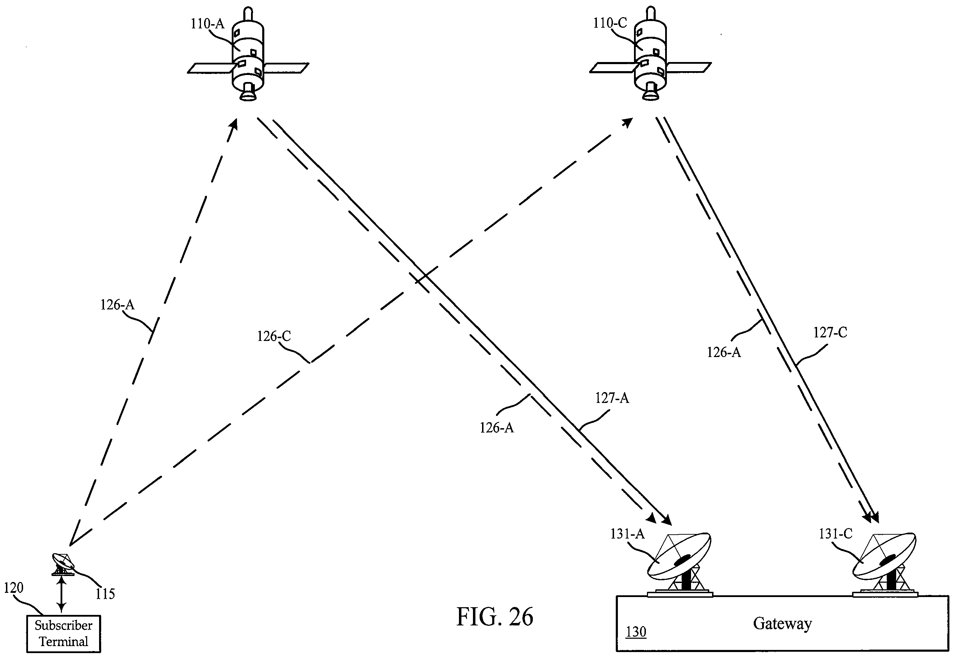

FIG. 26 shows another satellite communication system according to another embodiment of the invention. According to this embodiment of the invention, subscriber terminal 120 transmits signals 126 to the gateway 130 through two secondary satellites 110-A, 110-B. According to this embodiment of the invention, the subscriber terminal does not transmit signals to a primary satellite. Both secondary satellites do not provide primary access to the subscriber terminal and/or to the gateway.

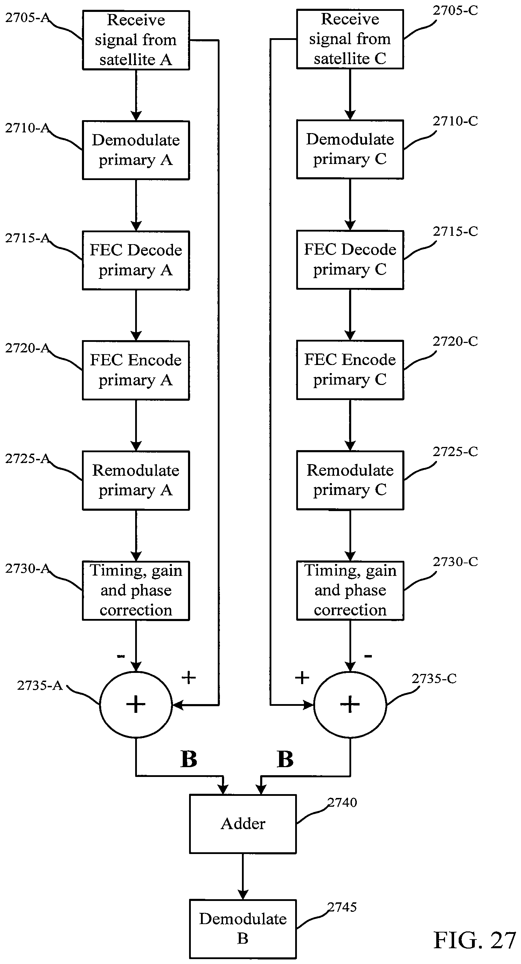

FIG. 27 shows a flow chart for isolating and adding the signals received from the secondary satellites 110-A, 110-C shown in FIG. 26 according to another embodiment of the invention. The signals may be received and processed, for example, at a gateway. Primary signal A is received at the first secondary satellite 110-A and primary signal C is received at the second secondary satellite 110-C. Both secondary satellites also receive signal B as a secondary signal. The goal of the flow chart is to isolate the secondary signals by subtracting out the primary signals and then adding the secondary signals. Signals A and C are received from their respective satellites at blocks 2705. The primary signals, signal A and signal C, are then demodulated at blocks 2710 and decoded at blocks 2715. The primary signals are then recoded at blocks 2720 and remodulated at blocks 2725. The primary signals are then subtracted from the received signal at blocks 2735. Once subtracted, the secondary signals, signal B, is left. According to this embodiment, the two channels produce two signals that may then be added together at block 2740 and demodulated at block 2745. A delay in one or both channels may be introduced as well. The signals may be added using maximal ratio combining or any other soft combining.

Specific details are given in the above description to provide a thorough understanding of the embodiments. However, it is understood that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Implementation of the techniques, blocks, steps and means described above may be done in various ways. For example, these techniques, blocks, steps and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above and/or a combination thereof.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, scripting languages, firmware, middleware, microcode, hardware description languages and/or any combination thereof. When implemented in software, firmware, middleware, scripting language and/or microcode, the program code or code segments to perform the necessary tasks may be stored in a machine readable medium, such as a storage medium. A code segment or machine-executable instruction may represent a procedure, a function, a subprogram, a program, a routine, a subroutine, a module, a software package, a script, a class, or any combination of instructions, data structures and/or program statements. A code segment may be coupled to another code segment or a hardware circuit by passing and/or receiving information, data, arguments, parameters and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in a memory. Memory may be implemented within the processor or external to the processor. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels and/or various other mediums capable of storing, containing or carrying instruction(s) and/or data.

**Claims**

1. A satellite communication system comprising:

   a first satellite (110-A) configured to receive signals from a first plurality of user terminals (120-A) in only a first polarization, receive signals from a second plurality of user terminals (120-B) in only a second polarization being orthogonal with regard to the first polarization, transmit the signals from the first plurality of user terminals in only the first polarization and the signals from the second plurality of user terminals in only the second, orthogonal, polarization to a gateway (130), receive first feeder signals from the gateway in only the first polarization, and transmit the first feeder signals to the first plurality of user terminals in only the first polarization; and
   a second satellite (110-B) configured to receive signals from the first plurality of user terminals in only the first polarization, receive signals from the second plurality of user terminals in only the second, orthogonal, polarization, transmit the signals from the first plurality of user terminals in only the first polarization and the signals from the second plurality of user terminals in only the second, orthogonal, polarization to the gateway, receive second feeder signals from the gateway in only the second, orthogonal, polarization, and transmit the second feeder signals to the second plurality of user terminals in only the second, orthogonal, polarization.

2. The satellite communication system according to claim 1, wherein the gateway includes a first antenna (131-A) configured to receive the signals from the first satellite and the second satellite in only the first polarization, and a second antenna (131-B) configured to receive the signals from the first satellite and the second satellite in only the second, orthogonal, polarization.

3. The satellite communication system according to claim 1, wherein the gateway includes: a first antenna (133-1) configured to receive the signals from the first satellite in only the first polarization; a second antenna (133-2) configured to receive the signals from the first satellite in only the second, orthogonal, polarization; a third antenna (133-3) configured to receive the signals from the second satellite in only the first polarization; and a fourth antenna (133-4) configured to receive the signals from the second satellite in only the second, orthogonal, polarization.

4. The satellite communication system according to claim 1, wherein the signals in only the first polarization are left-hand polarized and the signals in only the second, orthogonal, polarization are right-hand polarized.

5. The satellite communication system according to claim 1, wherein the signals communication system according to claim 1, wherein the signals in are right-hand polarized and the signals in only the second, orthogonal, polarization are left-hand polarized.

6. The satellite communication system according to claim 1, wherein the signals in only the first polarization and the signals in only the second, orthogonal, polarization comprise spread spectrum signals

7. The satellite communication system according to claim 1, wherein the first feeder signals are multiplexed using time division multiplexing and the second feeder signals are multiplexed using time division multiplexing.

8. The satellite communication system according to claim 1, wherein the signals in only the first polarization are multiplexed using spread spectrum techniques.

9. The satellite communication system according to claim 1, wherein the signals in only the second, orthogonal, polarization are multiplexed using spread spectrum techniques.

10. A satellite communication method comprising:

    receiving, at a first satellite (110-A), signals from a first plurality of user terminals (120-A) in only a first polarization;
    receiving, at the first satellite, signals from a second plurality of user terminals (120-B) in only a second polarization being orthogonal with regard to the first polarization;
    transmitting, from the first satellite, the signals from the first plurality of user terminals in only the first polarization and the signals from the second plurality of user terminals in only the second, orthogonal, polarization to a gateway (130);
    receiving, at a second satellite (110-B), signals from the first plurality of user terminals in only a first polarization;
    receiving, at the second satellite, signals from the second plurality of user terminals in only the second, orthogonal, polarization;
    transmitting, from the second satellite, the signals from the first plurality of user terminals in only the first polarization and the signals from the second plurality of user terminals in only the second, orthogonal, polarization to the gateway;
    receiving, at the first satellite, first feeder signals from the gateway in only the first polarization;
    transmitting, from the first satellite, the first feeder signals to the first plurality of user terminals in only the first polarization;
    receiving, at the second satellite, second feeder signals from the gateway in only the second, orthogonal, polarization; and
    transmitting, from the second satellite, the second feeder signals to the second plurality of user terminals in only the second, orthogonal, polarization.

11. The method according to claim 10, wherein the gateway receives the signals from the first and second satellites in only the first polarization at a first antenna (131-A) and the signals from the first and second satellites in only the second, orthogonal, polarization at a second antenna (131-B).

12. The method according to claim 10, wherein the gateway receives the signals from the first satellite in only the first polarization at a first antenna (133-1); the gateway receives the signals from the first satellite in only the second, orthogonal, polarization at a second antenna (133-2); the gateway receives the signals from the second satellite in only the first polarization at a third antenna (133-3); and the gateway receives the signals from the second satellite in only the second, orthogonal, polarization at a fourth antenna (133-4).

**Patentansprüche**

1. Satellitenkommunikationssystem, das aufweist:

    einen ersten Satelliten (110-A), der dazu konfiguriert ist, Signale von einer ersten Vielzahl von Benutzer-Endgeräten (120-A) nur in einer ersten Polarisation zu empfangen, Signale von einer zweiten Vielzahl von Benutzer-Endgeräten (120-B) nur in einer zweiten Polarisation zu empfangen, die zu der ersten Polarisation orthogonal ist, die Signale von der ersten Vielzahl von Benutzer-Endgeräten nur in der ersten Polarisation und die Signale von der zweiten Vielzahl von Benutzer-Endgeräten nur in der zweiten, orthogonalen Polarisation an ein Gateway (130) zu senden, erste Feeder-Signale von dem Gateway nur in der ersten Polarisation zu empfangen, und die ersten Feeder-Signale nur in der ersten Polarisation an die erste Vielzahl von Benutzer-Endgeräten zu senden; und einen zweiten Satelliten (110-B), der dazu konfiguriert ist, Signale von der ersten Vielzahl von Benutzer-Endgeräten nur in der ersten Polarisation zu empfangen, Signale von der zweiten Vielzahl von Benutzer-Endgeräten nur in der zweiten, orthogonalen Polarisation zu empfangen, die Signale von der ersten Vielzahl von Benutzer-Endgeräten nur in der ersten Polarisation und die Signale von der zweiten Vielzahl von Benutzer-Endgeräten nur in der zweiten, orthogonalen Polarisation an das Gateway zu senden, zweite Feeder-Signale von dem Gateway nur in der zweiten, orthogonalen Polarisation zu empfangen, und die zweiten Feeder-Signale nur in der zweiten, orthogonalen Polarisation an die zweite Vielzahl von Benutzer-Endgeräten zu senden.

2. Satellitenkommunikationssystem nach Anspruch 1, wobei das Gateway eine erste Antenne (131-A) aufweist, die dazu konfiguriert ist, Signale von dem ersten Satelliten und dem zweiten Satelliten nur in der ersten Polarisation zu empfangen, und eine zweite Antenne (131-B), die dazu konfiguriert ist, die Signale von dem ersten Satelliten und dem zweiten Satelliten nur in der zweiten, orthogonalen Polarisation zu empfangen.

3. Satellitenkommunikationssystem nach Anspruch 1, wobei das Gateway aufweist: eine erste Antenne (133-1), die dazu konfiguriert ist, die Signale von dem ersten Satelliten nur in der ersten Polarisation zu empfangen; eine zweite Antenne (133-2), die dazu konfiguriert ist, die Signale von dem ersten Satelliten nur in der zweiten, orthogonalen Polarisation zu empfangen; eine dritte Antenne (133-3), die dazu konfiguriert ist, die Signale von dem zweiten Satelliten nur in der ersten Polarisation zu empfangen; und eine vierte Antenne (133-4), die dazu konfiguriert ist, die Signale von dem zweiten Satelliten nur in der zweiten, orthogonalen Polarisation zu empfangen.

4. Satellitenkommunikationssystem nach Anspruch 1, wobei die Signale nur in der ersten Polarisation linksdrehend polarisiert sind und die Signale nur in der zweiten, orthogonalen Polarisation rechtsdrehend polarisiert sind.

5. Satellitenkommunikationssystem nach Anspruch 1, wobei die Signale rechtsdrehend polarisiert sind und die Signale nur in der zweiten, orthogonalen Polarisation linksdrehend polarisiert sind.

6. Satellitenkommunikationssystem nach Anspruch 1, wobei die Signale nur in der ersten Polarisation und die Signale nur in der zweiten, orthogonalen Polarisation Spreizspektrumsignale aufweisen.

7. Satellitenkommunikationssystem nach Anspruch 1, wobei die ersten Feeder-Signale mittels Zeitmultiplexen gemultiplext werden und die zweiten Feeder-Signale mittels Zeitmultiplexen gemultiplext werden.

8. Satellitenkommunikationssystem nach Anspruch 1, wobei die Signale nur in der ersten Polarisation mittels Spreizspektrumtechniken gemultiplext werden.

9. Satellitenkommunikationssystem nach Anspruch 1, wobei die Signale nur in der zweiten, orthogonalen Polarisation mittels Spreizspektrumtechniken gemultiplext werden.

10. Satellitenkommunikationsverfahren, das beinhaltet:

Empfangen, an einem ersten Satelliten (110-A), von Signalen von einer ersten Vielzahl von Benutzer-Endgeräten (120-A) nur in einer ersten Polarisation;
Empfangen, an dem ersten Satelliten, von Signalen von einer zweiten Vielzahl von Benutzer-Endgeräten (120-B) nur in einer zweiten Polarisation, die zu der ersten Polarisation orthogonal ist;
Senden, von dem ersten Satelliten, der Signale von der ersten Vielzahl von Benutzer-Endgeräten nur in der ersten Polarisation und der Signale von der zweiten Vielzahl von Benutzer-Endgeräten nur in der zweiten, orthogonalen Polarisation an ein Gateway (130);
Empfangen, an einem zweiten Satelliten (110-B), von Signalen von der ersten Vielzahl von Benutzer-Endgeräten nur in einer ersten Polarisation;
Empfangen, an dem zweiten Satelliten, von Signalen von der zweiten Vielzahl von Benutzer-Endgeräten nur in der zweiten, orthogonalen Polarisation;
Senden, von dem zweiten Satelliten, der Signale von der ersten Vielzahl von Benutzer-Endgeräten nur in der ersten Polarisation und der Signale von der zweiten Vielzahl von Benutzer-Endgeräten nur in der zweiten, orthogonalen Polarisation an das Gateway;
Empfangen, an dem ersten Satelliten, erster Feeder-Signale von dem Gateway nur in der ersten Polarisation;
Senden, von dem ersten Satelliten, der ersten Feeder-Signale an die erste Vielzahl von Benutzer-Endgeräten nur in der ersten Polarisation;
Empfangen, an dem zweiten Satelliten, zweiter Feeder-Signale von dem Gateway nur in der zweiten, orthogonalen Polarisation; und
Senden, von dem zweiten Satelliten, der zweiten Feeder-Signale an die zweite Vielzahl von Benutzer-Endgeräten nur in der zweiten, orthogonalen Polarisation.

11. Verfahren nach Anspruch 10, wobei das Gateway die Signale von den ersten und zweiten Satelliten nur in der ersten Polarisation an einer ersten Antenne (131-A) empfängt und die Signale von den ersten und zweiten Satelliten nur in der zweiten, orthogonalen Polarisation an einer zweiten Antenne (131-B) empfängt.

12. Verfahren nach Anspruch 10, wobei das Gateway die Signale von dem ersten Satelliten nur in der ersten Polarisation an einer ersten Antenne (133-1) empfängt; das Gateway die Signale von dem ersten Satelliten nur in der zweiten, orthogonalen Polarisation an einer zweiten Antenne (133-2) empfängt; das Gateway die Signale von dem zweiten Satelliten nur in der ersten Polarisation an einer dritten Antenne (133-3) empfängt; und das Gateway die Signale von dem zweiten Satelliten nur in der zweiten, orthogonalen Polarisation an einer vierten Antenne (133-4) empfängt.

**Revendications**

1. Système de communication par satellite comprenant :

un premier satellite (110-A) conçu pour recevoir des signaux d'une première pluralité de terminaux d'utilisateur (120-A) dans une seule première polarisation, recevoir des signaux d'une deuxième pluralité de terminaux d'utilisateur (120-B) dans une seule deuxième polarisation orthogonale à la première polarisation, transmettre les signaux de la première pluralité de terminaux d'utilisateur dans seulement la première polarisation et les signaux de la deuxième pluralité de terminaux d'utilisateur dans seulement la deuxième polarisation orthogonale à la première polarisation à une passerelle (130), recevoir de premiers signaux d'alimentation de la passerelle dans seulement la première polarisation et transmettre les premiers signaux d'alimentation à la première pluralité de terminaux d'utilisateur dans seulement la première polarisation ; et
un deuxième satellite (110-B) conçu pour recevoir des signaux de la première pluralité de terminaux d'utilisateur dans seulement la première polarisation, recevoir des signaux de la deuxième pluralité de terminaux d'utilisateur dans seulement la deuxième polarisation orthogonale, transmettre les signaux de la première pluralité de terminaux d'utilisateur dans seulement la première polarisation et les signaux de la deuxième pluralité de terminaux d'utilisateur dans seulement la deuxième polarisation orthogonale à la passerelle, recevoir de deuxièmes signaux d'alimentation de la passerelle dans seulement la deuxième polarisation orthogonale et transmettre les deuxièmes signaux d'alimentation à la deuxième pluralité de terminaux d'utilisateur dans seulement la deuxième polarisation orthogonale.

2. Système de communication par satellite selon la revendication 1, dans lequel la passerelle inclut une première antenne (131-A) conçue pour recevoir les signaux du premier satellite et du deuxième satellite seulement dans la première polarisation, et une deuxième antenne (131-B) conçue pour recevoir les signaux du premier satellite et du deuxième satellite seulement dans la deuxième polarisation orthogonale.

3. Système de communication par satellite selon la revendication 1, dans lequel la passerelle inclut une première antenne (133-1) conçue pour recevoir les signaux du premier satellite seulement dans la première polarisation, une deuxième antenne (133-2) conçue pour recevoir les signaux du premier satellite seulement dans la deuxième polarisation orthogonale, une troisième antenne (133-3) conçue pour recevoir les signaux du deuxième satellite seulement dans la première polarisation et une quatrième antenne (133-4) conçue pour recevoir les signaux du deuxième satellite seulement dans la deuxième polarisation orthogonale.

4. Système de communication par satellite selon la revendication 1, dans lequel seulement les signaux dans la première polarisation sont polarisés vers la gauche et seulement les signaux dans la deuxième polarisation orthogonale sont polarisés vers la droite.

5. Système de communication par satellite selon la revendication 1, dans lequel seulement les signaux dans la première polarisation sont polarisés vers la droite et seulement les signaux dans la deuxième polarisation orthogonale sont polarisés vers la gauche.

6. Système de communication par satellite selon la revendication 1, dans lequel seulement les signaux dans la première polarisation et seulement les signaux dans la deuxième polarisation orthogonale comprennent des signaux à spectre étalé.

7. Système de communication par satellite selon la revendication 1, dans lequel les premiers signaux d'alimentation sont multiplexés par multiplexage temporel et les deuxièmes signaux d'alimentation sont multiplexés par multiplexage temporel.

**8.** Système de communication par satellite selon la revendication 1, dans lequel seulement les signaux dans la première polarisation sont multiplexés par des techniques d'étalement de spectre.

**9.** Système de communication par satellite selon la revendication 1, dans lequel seulement les signaux dans la deuxième polarisation orthogonale sont multiplexés par des techniques d'étalement de spectre.

**10.** Méthode de communication par satellite comprenant :

la réception, au niveau d'un premier satellite (110-A), de signaux d'une première pluralité de terminaux d'utilisateur (120-A) dans seulement une première polarisation ;

la réception, au niveau du premier satellite, de signaux d'une deuxième pluralité de terminaux d'utilisateur (120-A) dans seulement une deuxième polarisation orthogonale à la première polarisation ;

la transmission, depuis le premier satellite, des signaux de la première pluralité d'utilisateurs seulement dans la première polarisation et des signaux de la deuxième pluralité d'utilisateurs seulement dans la deuxième polarisation orthogonale, à la passerelle (130) ;

la réception, au niveau d'un deuxième satellite (110-B), de signaux de la première pluralité d'utilisateurs seulement dans une première polarisation ;

la réception, au niveau du deuxième satellite, de signaux de la deuxième pluralité de terminaux d'utilisateur dans seulement la deuxième polarisation orthogonale ;

la transmission, depuis le deuxième satellite, des signaux en provenance de la première pluralité de terminaux d'utilisateurs dans seulement la première polarisation et des signaux en provenance de la deuxième pluralité de terminaux d'utilisateurs dans seulement la deuxième polarisation orthogonale vers la passerelle ;

la réception, au niveau du premier satellite, des premiers signaux d'alimentation depuis la passerelle seulement dans la première polarisation ;

la transmission, depuis le premier satellite, des premiers signaux d'alimentation à la première pluralité de terminaux d'utilisateur seulement dans la première polarisation ;

la réception, au niveau du deuxième satellite, des deuxièmes signaux d'alimentation depuis la passerelle seulement dans la deuxième polarisation orthogonale ;

la transmission, depuis le deuxième satellite, des deuxièmes signaux d'alimentation à la deuxième pluralité de terminaux d'utilisateur seulement dans la deuxième polarisation orthogonale.

**11.** Méthode de communication par satellite selon la revendication 10, dans lequel la passerelle reçoit les signaux des premier et deuxième satellites seulement dans la première polarisation au niveau de la première antenne (131-A) et les signaux des premier et deuxième satellites seulement dans la deuxième polarisation orthogonale au niveau de la deuxième antenne (131-B).

**12.** Méthode de communication par satellite selon la revendication 10, dans lequel la passerelle reçoit les signaux du premier satellite seulement dans la première polarisation au niveau de la première antenne (133-1), la passerelle reçoit les signaux du premier satellite seulement dans la deuxième polarisation orthogonale au niveau de la deuxième antenne (133-2), la passerelle reçoit les signaux du deuxième satellite seulement dans la première polarisation au niveau de la troisième antenne (133-3), et la passerelle reçoit les signaux du deuxième satellite seulement dans la deuxième polarisation orthogonale au niveau de la quatrième antenne (133-4).

FIG. 1A

FIG. 1B

110-A
110-B
< 2°

125-A-1

125-A-n

125-A-1

125-A-n

135-A-1

135-A-2

135-B-1

135-B-2

125-B-1

125-B-1

125-B-n

125-B-n

115-A-1

115-A-n

115-B-1

115-B-n

Subscriber Terminal

Subscriber Terminal

Subscriber Terminal

Subscriber Terminal

120-A-1

120-A-n

120-B-1

120-B-n

131-A

131-B

Gateway

130

FIG. 2

DSP TxA1  Radio TxA1  121-A-1  122-A-1  115-A-1  -1

DSP TxAn  Radio TxAn  120-A-n  121-A-n  122-A-n  115-A-n

125-A-1  125-A-n  125-A-1  125-A-n

Radio RxA  Radio TxA  113-A-1  111-A-1  112-A-1  114-A-1  110-A

Radio RxB  Radio TxB  113-B-1  111-B-1  112-B-1  114-B-1

135-A-1  135-A-1

Radio RxA  DSP RxA  133-B-2  131-B-2  132-B-2  130

135-B-2

DSP TxB1  Radio TxB1  120-B-1  121-B-1  122-B-1  115-B-1

DSP TxBn  Radio TxBn  120-B-1  121-B-n  122-B-n  115-B-n

125-B-1  125-B-1  125-B-n  125-B-n

Radio RxA  Radio TxA  113-A-2  111-A-2  112-A-2  114-A-2  110-B

Radio RxB  Radio TxB  113-B-2  111-B-2  112-B-2  114-B-2

Radio RxB  DSP RxB  133-B-2  131-B-2  132-B-2

EP 2 055 020 B1

FIG. 3

110-A

110-B

> 2°

125-A-1

125-A-n

125-A-1

125-A-n

125-B-n

125-B-n

125-B-1

125-B-1

135-A-2

135-A-1

135-B-1

135-B-2

115-A-1

115-A-n

115-B-1

115-B-n

Subscriber Terminal

Subscriber Terminal

Subscriber Terminal

Subscriber Terminal

120-A-1

120-A-n

120-B-1

120-B-n

133-2

133-3

133-1

133-4

Gateway 130

EP 2 055 020 B1

FIG. 4

EP 2 055 020 B1

500 Forward Channel
Diagram

131

504

Forward Channel

508-1    508-2    ● ● ●    508-n

120

## FIG. 5

504 Forward
Channel

Superframe 504

Downstream Sub-Channels

| Sub-Channel 508-1 | Sub-Channel 508-2 | Sub-Channel 508-3 | ● ● ● | Sub-Channel 508-n |

Time ⟶

## FIG. 6

FIG. 7

805

Low Noise
Amplifier

Carrier
Frequency

810

Down
Convert

815

Match filter → Processing   820

825

Iterative
combiner

830

Data
Detector

FIG. 8

FIG. 9

FIG. 10

FIG. 11

110-A    2°    110-B    2°    110-C

206-A    205-A    206-B    204-B

204-A

205-B

131-A    131-B    131-C

Gateway

130

120-A    120-B

1120

EP 2 055 020 B1

33

1210

| | Symbol 1 | Symbol 2 | Symbol 3 | Symbol 4 | |

1220

| | Symbol 1 | Symbol 2 | Symbol 3 | Symbol 4 |

1230

| | Symbol 1 | Symbol 2 | Symbol 3 | Symbol 4 | |

Overlap

Time

## FIG. 12A

1210

| | Symbol 1 | Symbol 2 | Symbol 3 | Symbol 4 | |

1220

| | Symbol 1 | Symbol 2 | Symbol 3 | Symbol 4 |

1230

| | Symbol 1 | Symbol 2 | Symbol 3 | Symbol 4 | |

Overlap

Time

## Fig. 12B

1210

| | Sym 1 | Sym 2 | Sym 3 | Sym 4 | Sym 5 | Sym 6 | Sym 7 | Sym 8 | |

1220

| | | Sym 1 | Sym 2 | Sym 3 | Sym 4 | Sym 5 | Sym 6 | Sym 7 | Sym 8 |

1230

| | Sym 1 | Sym 2 | Sym 3 | Sym 4 | Sym 5 | Sym 6 | Sym 7 | Sym 8 | |

Time

## FIG. 12C

FIG. 13A

FIG. 13B

FIG. 13C

FIG. 14A

FIG. 14B

FIG. 14C

Receive data —1530

The transmission time difference is determined —2205

Determine OFDM signal time —2210

Determine the number of orthogonal subcarriers —2215

Convert data into OFDM data stream —1535

Transmit OFDM signal to satellites using multiple antennas —1540

FIG.
15

FIG. 16

EP 2 055 020 B1

FIG. 17

EP 2 055 020 B1

FIG. 18
(prior art)

110-A    110-B    110-C

115-A    115-B    115-C    131-A    131-B    131-C

| Subscriber Terminal | Subscriber Terminal | Subscriber Terminal | Gateway 130 | Gateway 130 | Gateway 130 |

120-A    120-B    120-C

EP 2 055 020 B1

FIG. 19A

EP 2 055 020 B1

110-A   110-B   110-C

126-A
126-B
126-C
127-A
127-B
127-C

115

131-A   131-B   131-C

Subscriber
Terminal

120

Gateway

130

FIG. 19B

EP 2 055 020 B1

FIG. 20

FIG. 21

110-A

110-C

126-A

125-A

126-C

126-C

125-C

126-A

120

115

131-A

131-C

Subscriber
Terminal

130    Gateway

FIG. 22

FIG. 23

FIG. 24

FIG. 25

FIG. 26

2705-A　Receive signal from satellite A

2705-C　Receive signal from satellite C

2710-A　Demodulate primary A

2710-C　Demodulate primary C

2715-A　FEC Decode primary A

2715-C　FEC Decode primary C

2720-A　FEC Encode primary A

2720-C　FEC Encode primary C

2725-A　Remodulate primary A

2725-C　Remodulate primary C

2730-A　Timing, gain and phase correction

2730-C　Timing, gain and phase correction

2735-A

2735-C

B　B

Adder　2740

Demodulate B　2745

FIG. 27

50

**EP 2 055 020 B1**

**Patent documents cited in the description**

- WO 2005093967 A
- WO 2005091528 A1
- WO 0059136 A1
- EP 1163742 A0